# EUROPEAN PATENT APPLICATION

(11) **EP 3 096 514 A1**
(43) Date of publication of application: **23.11.2016**
(21) Application number: 16170463.0
(22) Date of filing: 19.05.2016
(51) Int. Cl.: H04N 5/44, H04N 5/63, H04N 21/422

(54) **DISPLAY APPARATUS AND REMOTE CONTROL APPARATUS**

(30) Priority: 22.05.2015 KR 20150071663; 12.04.2016 KR 20160044996
(71) Applicant: Samsung Electronics Co., Ltd, Gyeonggi-do 16677 (KR)
(72) Inventor: MOON, Joo-sun, Seoul (KR); RYU, Chun, Gwangju (KR); CHOI, Yoo-jin, Seoul (KR); JANG, Sung-hyun, Seoul (KR); BYUN, Ji-eun, Seoul (KR); LEE, Young-ah, Seoul (KR); KIM, Do-young, Seoul (KR); CHOI, Min-ho, Gyeonggi-do (KR); CHOI, Hyun-seok, Gyeonggi-do (KR); HAHM, Cheul-hee, Gyeonggi-do (KR); HWANG, Woo-seok, Seoul (KR)
(74) Representative: Taor, Simon Edward William

(57) **Abstract**

A display apparatus and a remote control apparatus are provided. A display system according to the exemplary embodiment: a display apparatus, and a remote control apparatus sensing a motion and transmitting the sensed motion information to the display apparatus. The display apparatus displays a UI element when receiving motion information of the remote control apparatus and displays image contents when receiving a power on command from the remote control apparatus while the UI element is displayed.

## Description

Apparatuses and methods consistent with the embodiments relate to a display system, a display apparatus, a remote control apparatus, and a method for controlling the same, and more particularly, to a display system displaying a UI (user interface) element or graphical user interface (GUI) providing information to a user before a power on command, a display apparatus, a remote control apparatus, and a method for controlling the same.

With the recent development of electronic technologies, a demand for electronic apparatuses providing various user experiences has increased. In the case of a display apparatus, the related art discusses only ways to provide user experiences while image contents are displayed.

Therefore, a necessity to provide user experiences greeting and seeing off a user before and after the image content is displayed on the display apparatus has been increased. However, the related art does not discuss the user experiences before and after viewing the image contents.

Further, to obtain the user experiences providing various types of information, the user needs to perform complicated manipulations. As a result, there is a problem in that accessibility may be poor and the inducement to the corresponding functions may not be made.

Additional aspects and/or advantages will be set forth in part in the description which follows and, in part, will be apparent from the description, or may be learned by practice of the embodiments.

Exemplary embodiments overcome the above disadvantages and other disadvantages not described above. Also, the embodiments are not required to overcome the disadvantages described above, and an exemplary embodiment may not overcome any of the problems described above.

The embodiments provide a display system capable of confirming various types of information by a simple manipulation without turning on a display apparatus, a display apparatus, a remote control apparatus, and a method for controlling the same.

According to an aspect, a display system includes: a display apparatus; and a remote control apparatus sensing a motion and transmitting the sensed motion information to the display apparatus, in which the display apparatus may display a UI (user interface) element or graphical user interface (GUI) when receiving the motion information of the remote control apparatus and display image contents when receiving a power on command from the remote control apparatus while the UI element is displayed.

According to another aspect, a display apparatus includes: a display unit; and a control unit controlling the display unit to display a UI element when a preset event is generated before a power on command and display image contents when the power on command is input while the UI element is displayed.

The preset event may be reception of motion information of a remote control apparatus from the remote control apparatus connected to the display apparatus.

The control unit may control the display unit to stop a display of the displayed UI element when a preset time elapses after the UI element is displayed.

The UI element may be a graphic object corresponding to at least one of time information, date information, traffic information, and weather information.

The control unit may change the displayed UI element when a preset second event is generated to display the UI element.

The preset second event may be at least one of connection with an external server, reception of a UI element change command, reception of a direction change command, and reception of motion information.

The control unit may display the UI element only in some region of the screen on which the image contents are displayed.

The power on command may be at least one of a power state transition command, a source selection command, and a channel change command.

The control unit may display the image contents displayed before a power supply of the display apparatus is turned off on the display unit when the power state transition command is input while the UI element is displayed.

The control unit may display the image contents corresponding to the input source selection command or the channel change command when the source selection command or the channel change command is input while the UI element is displayed.

The control unit may control the display unit to keep the display of the UI element until it is ready to display the image contents and then display the image contents, even if the power on command is input.

In addition, the controller, when a preset key input is received after the UI element is displayed, may be shifted to a power-on state and perform a function to correspond to the preset key input.

According to another aspect, a remote control apparatus connectable to a display apparatus includes: a sensor unit sensing a motion of the remote control apparatus; a communication unit performing communication with the display apparatus; and a control unit controlling the communication unit to transmit a control command to display a pre-registered UI element in the display apparatus prior to transmitting a power on command for the display apparatus to the display apparatus, when the sensor unit senses the motion of the remote control apparatus.

The communication unit may include: a first communication unit transmitting the control command to the display apparatus by an infrared (IR) scheme; and a second communication unit performing communication with the display apparatus by a Bluetooth scheme, and the control unit may transmit the control command through the first communication unit and be connected to the display apparatus by the Bluetooth and then again transmit the control command through the second communication unit.

The control unit may control the communication unit to transmit the control command at a preset period.

The control unit may control the communication unit to stop a transmission of the control command when the communication unit receives information that the display apparatus displays the image contents.

According to another aspect, a method for controlling a display apparatus includes: displaying a UI element when a preset event is generated before a power on command; and displaying the image contents when the power on command is input while the UI element is displayed.

The preset event may be reception of motion information of a remote control apparatus from the remote control apparatus connected to the display apparatus.

The UI element may be a graphic object corresponding to at least one of time information, date information, traffic information, and weather information.

According to another aspect, a method for controlling a remote control apparatus connectable to a display apparatus includes: sensing a motion of the remote control apparatus; and transmitting a control command to display a pre-registered UI element in the display apparatus prior to transmitting a power on command for the display apparatus to the display apparatus, when the motion is sensed.

In the transmitting, the control command may be transmitted by an infrared (IR) scheme and after a Bluetooth (BT) connection to the display apparatus, the control command may be again transmitted by a BT scheme.

The method may further include: stopping transmitting the control command when receiving information that the display apparatus displays the image contents. According to an aspect, a display system includes a display apparatus and a remote control apparatus sensing an event while the display is off and transmitting sensed event information to the display apparatus, where the display apparatus displays a GUI (graphical user interface) upon receiving the event information and displays image contents after the event is sensed, before receiving a power on command and after receiving the power on command from the remote control apparatus while the GUI is displayed.

The event senses motion by a user.

The event is an event associated with a user.

The GUI displays a greeting message.

The GUI displays a time of day.

The GUI displays a message.

The message includes an environment message relevant to the user.

The environment message includes at least one of current time, current date, traffic information and current weather associated with the user.

The message includes an email message.

The display is a smart television and the event is sensed by a remote control for the television.

The GUI is generated and displayed after the event and before after power on command and an image is displayed when the power on command is input while the GUI is displayed.

Where an internet connection exists the image contents images displayed comprise a GUI greeting message followed by a background broadcast image and when the internet connection does not exist the image contents comprise the GUI greeting message followed by an environment message followed by the background broadcast message.

The GUI is not displayed when the image contents at a time of sensing the event,

According to an aspect, a non-transitory computer readable medium storing a program performing a method, the method including displaying a graphical user interface (GUI) element on a display apparatus when a preset event is generated before a display apparatus power on command and displaying image contents on the display apparatus when the power on command is input while the GUI element is displayed.As described above, according to various exemplary embodiments, it is possible to obtain various user experiences even before the display apparatus receives the power on command.

Additional and/or other aspects and advantages will be set forth in part in the description which follows and, in part, will be obvious from the description, or may be learned by practice thereof.

The above and/or other aspects will be more apparent by describing certain exemplary embodiments with reference to the accompanying drawings, in which:
FIG. 1 is a diagram illustrating a display system according to an exemplary embodiment;
FIG. 2 is a block diagram schematically illustrating a configuration of a display apparatus according to an exemplary embodiment;
FIG. 3 is a block diagram illustrating in detail the configuration of the display apparatus according to the exemplary embodiment;
FIGS. 4A to 4F are diagrams illustrating a case in which a power on command is input while UI elements are displayed on the display apparatus according to an exemplary embodiment;
FIGS. 5A to 5K are diagrams illustrating various UI elements according to an exemplary embodiment;
FIG. 6 is a diagram for describing a change in a display of the UI element depending on a connection state with an external server according to an exemplary embodiment;
FIGS. 7A to 7D are diagrams for describing a region in which the UI element according to an exemplary embodiment is displayed;
FIGS. 8A to 8C are diagrams for describing a source selection screen according to an exemplary embodiment;
FIGS. 9A to 9C are diagrams for describing a case in which the display apparatus according to an exemplary embodiment is connected to an audio apparatus;
FIGS. 10A to 10D are diagrams for describing a case in which the display apparatus according to an exemplary embodiment is connected to a smart phone;
FIGS. 11A to 11C are diagrams for describing a function of extracting a dominant color and displaying a message at the time of a power off command according to an exemplary embodiment;
FIGS. 12A and 12B are diagrams for describing a function of providing illumination for a predetermined time at the time of a power off command according to an exemplary embodiment;
FIG. 13 is a block diagram for describing a configuration of a remote control apparatus according to an exemplary embodiment;
FIG. 14 is a flow chart for describing a method for controlling a display apparatus according to an exemplary embodiment;
FIG. 15 is a flow chart for describing a method for controlling a remote control apparatus according to an exemplary embodiment.
FIG. 16 is a view for describing an interaction for executing functions of a display apparatus according to another exemplary embodiment,
FIGS. 17 to 26D are views for describing scenarios of an interaction for executing functions of a display apparatus according to various exemplary embodiments, and
FIGS.27A to 28B are views for describing a method of welcome mode trigger of a display apparatus according to another exemplary embodiment.

Reference will now be made in detail to the embodiments, examples of which are illustrated in the accompanying drawings, wherein like reference numerals refer to the like elements throughout. The embodiments are described below to explain referring to the figures.

The exemplary embodiments of the present disclosure may be diversely modified. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions without departing from the scope and spirit of the present disclosure. Also, well-known functions or constructions are not described in detail since they would obscure the disclosure with unnecessary detail.

The terms "first", "second", etc. may be used to describe diverse components, but the components are not limited by the terms. The terms are only used to distinguish one component from the others.

The terms used in the present application are only used to describe the exemplary embodiments, but are not intended to limit the scope of the disclosure. The singular expression also includes the plural meaning as long as it does not differently mean in the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In the exemplary embodiment of the present disclosure, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

Hereinafter, the present disclosure will be described in detail with reference to the accompanying drawings.

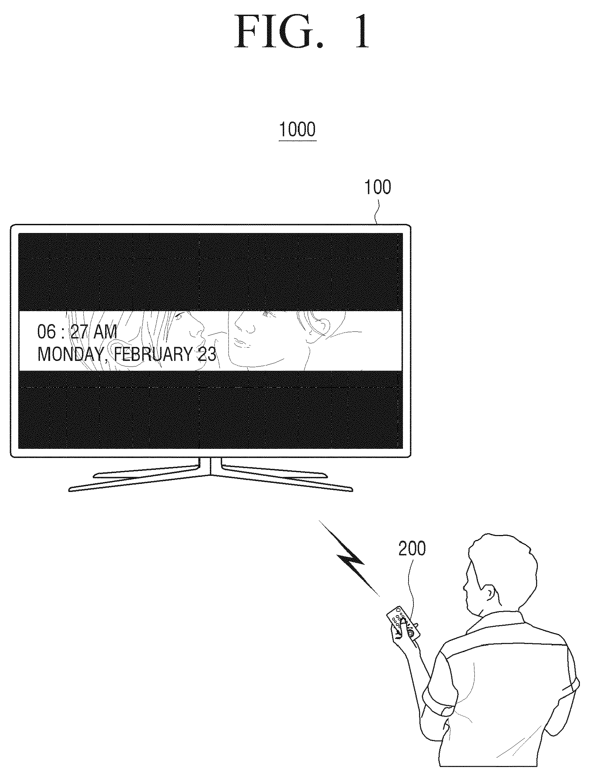

FIG. 1 is a diagram illustrating a display system 1000 according to an exemplary embodiment. As illustrated in FIG. 1, the display system 1000 may include a display apparatus 100 and a remote control apparatus 200. The display apparatus 100 may be a smart TV, which is only an example. Therefore, the display apparatus 100 may be implemented as various display apparatuses such as a projection TV, a monitor, a notebook PC, a tablet and a smart phone. The remote control apparatus 200 may be implemented as a smart remote controller, which is only an example. Therefore, the remote control apparatus 200 may be implemented as various apparatuses such as a pointing device, a motion recognition apparatus, a speech recognition apparatus and a smart phone.

For example, if a user picks up the remote control apparatus 200 in a state in which a power supply of the display apparatus 100 is turned off, the remote control apparatus 200 senses its own motion. The remote control apparatus 200 transmits the sensed motion information to the display apparatus 100. When receiving the motion information, the display apparatus 100 displays a UI element. For example, as illustrated in FIG. 1, the UI element may be a UI (user interface) element or a graphical user interface (GUI) providing current time of day information. Next, when receiving a power on command from the remote control apparatus 200 while the UI element is displayed, the display apparatus 100 displays image contents.

According to the above-mentioned display system 1000, the user may obtain real-time information through the UI element displayed on the display apparatus 100 only by an operation of picking up the remote control apparatus 200. Further, the user may also receive image contents suitable for the situation where he/she is through the UI element. Therefore, the user may obtain his/her experiences before he/she views the image contents.

Further, like the display system 1000 according to the exemplary embodiment, to immediately display the UI element, there is a need to turn on a power supply within a short period of time. In the case of the display system 1000 according to the exemplary embodiment, when 1 to 1.5 seconds elapses on average from the operation of picking up the remote control apparatus 200, the display apparatus 100 may display the UI element.

The display apparatus 100 according to the exemplary embodiment supports a suspend to RAM power off (SRPO) state at the time of a power off and transfers a memory wakeup address and a system power off state required for the following booting to a sub processor (MICOM) before it enters the SRPO state and stores the memory wakeup address and the system power off state therein. The memory wakeup address may be a kernel wakeup vector value of an operating system to be first performed after resume, among memory addresses storing a previous operation state of the system. The display apparatus 100 may use the stored information to carry out a fast booting sequence during the following power on process. Therefore, when the user picks up the remote control apparatus 200, the display apparatus 100 may use the stored memory wakeup address to immediately display the UI element.

Further, the display apparatus 100 may determine whether the stored information is abnormal to determine whether to carry out the resume or cold booting. The resume means a return from the suspend state to the power on state and the cold booting means again turning on the power supply and carrying out the booting in the situation that the power supply of the display apparatus 100 is completely turned off.

In addition, a communication module, a camera module, etc., connected through an USB are sequentially resumed after other components of the display apparatus 100 are resumed, thereby improving a booting rate.

As illustrated in FIG. 1, an operation of picking up the remote control apparatus 200 or a feature of providing time information in the display apparatus 100 is only an example, but the embodiments are not limited thereto. Hereinafter, various examples of the display apparatus 100 and the remote control apparatus 200 will be described.

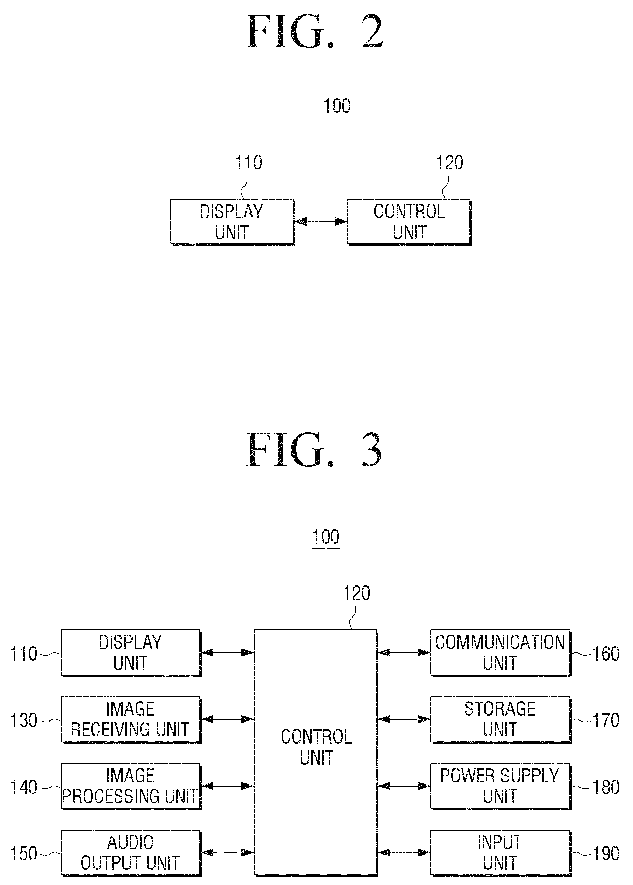

FIG. 2 is a block diagram illustrating a configuration of the display apparatus 100. Referring to FIG. 2, the display apparatus 100 may include a display unit 110 and a control unit 120.

The display unit 110 displays image contents input from various sources depending on a control of the control unit 120. Further, the display unit 110 displays pre-registered UI elements.

The control unit 120 controls general functions of the display apparatus 100. In particular, when a preset event is generated before a power on command, the control unit 120 may control the display unit 110 to display the UI elements. The preset event may be recognition of motion information from the remote control apparatus 200 or may be recognition of a user's motion or speech. In addition to the event set by a manufacturer, the user may set an event to display UI element.

When the power on command is input while the UI element is displayed, the control unit 120 may control the display unit 110 to display image contents. That is, the UI element is provided in an intermediate state of the power off state and the power on state of the display apparatus 100. The display apparatus 100 according to the exemplary embodiment provides the state in which the UI element is provided to provide various user experiences such as real-time information, a welcome message, content recommendation, and notification of the external source connected to the display apparatus 100 to the user before the user views the image contents.

When a preset time elapses after the UI element is displayed, the control unit 120 may control the display unit 110 to stop displaying the displayed UI element. The control unit 120 may allow the power supply state of the display apparatus 100 to enter the SRPO state while stopping displaying the UI element. As a result, the display apparatus 100 may shorten time required to again display the UI element later.

For example, when the user generates an event of picking up the remote control apparatus 200 to see weather information in real time, the display apparatus 100 displays the UI element only for the time during which the user sufficiently recognizes the weather information. The reason is that it is unnecessary to continuously provide the UI element in terms of power consumption. Further, when the preset event is generated contrary to a user's intention, the display of the UI element stops after the preset time elapses, such that the control unit 120 may correct an error due to malfunction.

The control unit 120 may control the display unit 110 to display various kinds of UI elements. For example, the UI element may be a graphic object corresponding to one of time information, date information, weather information, and traffic information. In addition, a welcome message, a content recommendation screen depending on user's preference, weather, or the like, a service connection screen, an interactive message, or a combination thereof may be provided as the UI element.

When a preset second event is generated to display other UI elements, the control unit 120 may change the displayed UI element. For example, the preset second event may be at least one of the connection with the external server, reception of a UI element change command, reception of a direction change command, and reception of motion information. The reception of command and information may be reception of a user input directly input to the display apparatus 100 and may also be reception of a control command from the remote control apparatus 200 connected to the display apparatus 100. For example, when the user wants to know the weather information as well as the UI element showing the first displayed time information, he/she may take an operation of shaking the remote control apparatus 200. The remote control apparatus 200 may sense the shaking to generate the motion information and then transmit the generated motion information to the display apparatus 100. The display apparatus 100 may receive the motion information corresponding to the second event and then convert the UI element from the time information to one displaying the weather information.

The control unit 120 may control the display unit 110 to display the UI element only in some region of the screen on which the image contents are displayed. The user may intuitively know whether the current display apparatus 100 is displaying the UI element or displaying general image contents by displaying the UI element only in some region of the screen.

When the power on command is input while the UI element is displayed, the control unit 120 may control the display unit 110 to stop the display of the UI element and display the image contents. For example, the power on command may be at least one of a power state transition command, a source selection command, and a channel change command.

When the power state transition command is input while the UI element is displayed, the control unit 120 may perform a control to display the image contents displayed before the power supply of the display apparatus 100 is turned off on the display unit 110. According to the exemplary embodiment, the power state transition command may be transmitted to the display apparatus 100 by pressing a power button of the remote control apparatus 200. According to another exemplary embodiment of, the power state transition command may be a command input by speaking 'power on.'

For example, when broadcasting contents of channel No. 11 are displayed before the power supply is turned off, the control unit 120 may control the display unit 110 to stop the display of the UI element and display the broadcasting contents of channel No. 11, corresponding to the power state transition command.

If the source selection command or the channel change command is input while the UI element is displayed, the control unit 120 may control the display unit 110 to display the image contents corresponding to the input source selection command or channel change command. For example, the display apparatus 100 may be connected to a set top box (STB), a DVD player, an audio apparatus, a game machine, a smart phone, etc. If the source selection command is input, the control unit 120 may control the display unit 110 to display the image contents input from the corresponding source apparatus. For example, when the game machine is selected as a source by pressing the source selection button of the remote control apparatus 200, the control unit 120 may control the display unit 110 to display a game screen input from the game machine.

Even if the broadcasting contents of channel No. 11 is displayed before the power supply is turned off, when receiving a channel change command corresponding to channel No. 9, the control unit 120 may control the display unit 110 to display the broadcasting contents of channel No. 9 corresponding to the channel change command, not the channel No. 11 displayed before the power supply is turned off.

Even if the power on command is input, the control unit 120 may control the display unit 110 to keep or maintain the display of the UI element until it is ready to display the image contents and then display the image contents. When the display unit stops displaying the UI element and displays the image contents as soon as the power on command is input, if it is not ready to display the image contents, a black screen on which nothing is displayed is displayed on the display unit 110. Therefore, the display apparatus 100 has an effect of naturally switching a screen by keeping or maintaining the display of the UI element until the apparatus is ready to display the image contents.

According to another exemplary, if it is not ready to display the image contents even if a predetermined time elapses, even if the black screen is displayed, the control unit 120 may control the display unit 110 to stop the display of the UI element. The reason is that when it is not ready to display the image contents even if a predetermined time elapses, the user may recognize that no image is input or available for display.

As described above, the user may obtain various user experiences through the display apparatus 100 even before he/she views the image contents through the display apparatus 100.

FIG. 3 is a diagram illustrating in detail the configuration of the display apparatus 100 according to the exemplary embodiment. Referring to FIG. 3, the display apparatus 100 includes the display unit 110, the control unit 120, such as a computer, an image receiving unit 130, an image processing unit 140, an audio output unit 150, a communication unit 160, a storage unit 170, a power supply unit 180, and an input unit 190.

The display unit 110 displays the UI element including a graphic object, such as a GUI control or widget, and the image contents. In particular, the display unit 110 displays the UI element when the preset event is generated before the power on command and displays the image contents when the power on command is input while the UI element is displayed.

The image receiving unit 130 receives image content data through various sources. For example, the image receiving unit 130 may receive broadcasting data from an external broadcasting station. As another example, the image receiving unit 130 may receive the image data from an external apparatus (ex. DVD player) or stream the image data from the external server. The image processing unit 140 performs image processing on the image data received from the image receiving unit 130. The image processing unit 140 may perform various image processings, such as decoding, scaling, noise filtering, frame rate conversion, and resolution conversion, on the image data.

The audio output unit 150 may output various alarm sounds or voice messages in addition to various audio data which are processed by the audio processing module.

The communication unit 160 serves to perform communication with the external apparatus according to various types of communication schemes. The communication unit 160 may receive an IR signal transmitted from the remote control apparatus 200. The communication unit 160 may include various communication chips supporting wired and wireless communications. For example, the communication unit 160 may include a chip which is operated by a wired LAN, a wireless LAN, WiFi, Bluetooth (BT), or near field communication (NFC) scheme. In the case of the BT connection, various types of connection information such as an SSID and a session key are first transmitted to and received from the external apparatus and information including a control command may be transmitted and received after the connection is completed.

The storage unit 170 stores various modules for driving the display apparatus 100. For example, the storage unit 170 may store software including a base module, a sensing module, a communication module, a presentation module, a web browser module, and a service module. In this case, the base module is a basic module which processes signals transferred from each hardware included in the display apparatus 100 and transfers the processed signals to an upper layer module. The sensing module is a module which collects information from various sensors and analyzes and manages the collected information. For example, the sensing module may include a speech recognition module, a motion recognition module, a face recognition module, etc. The presentation module is a module for configuring a display screen and may include a multimedia module which plays and outputs multimedia contents and a UI rendering module which performs UI and graphic processing. The communication module is a module for performing communication with the outside. The web browser module is a module which performs web browsing to access a web server. The service module is a module including various applications for providing various services.

Further, the storage unit 170 may store image contents, a photograph, an image file, etc., which the user wants to store. The photograph, etc., stored in the storage unit 170 may be used to configure the UI element. For example, when the UI element representing a birthday of a user's family member is displayed, a photograph of the birthday family stored in the storage unit 170 may be used.

When the power off command is input, the storage unit 170 may store a final screen of the displayed image contents. For example, the final screen may be stored in a volatile memory. When the final screen is stored in the volatile memory, the display apparatus 100 may keep or maintain a suspend to RAM state in which normal power is applied to the volatile memory. As another example, the storage unit 170 may also store the final screen in a non-transitory nonvolatile memory in which a user's photograph, etc., are stored.

Further, the display apparatus 100 may use a standby mode like the SPRO by storing a state of a hardware drive at the time of turning off the power supply of the display apparatus 100 in the storage unit 170. Therefore, the display apparatus 100 may use a self-refresh operation of the storage unit 170 in the suspend state to keep contents stored in the storage unit 170. Further, when the power on command is received or a command to display the UI element before the reception of the power on command by generating the preset event is received, the rapid return to an operation state before the power off may be made, using the stored state of the hardware driver.

The power supply unit 180 applies power to each component of the display apparatus 100. When the preset event is generated, the power supply unit 180 applies power to the display apparatus 100. In the SPRO state, the power supply unit 180 does not supply power to the display unit 110, the audio output unit 150, a system on chip (SoC), etc., among the components of the display apparatus 100 and supplies power to only the storage unit 170 performing a self refresh operation and the control unit 120 related to the resume operation.

The input unit 190 may receive various user commands for controlling the display apparatus 100. For example, the input unit 190 may receive the command for displaying the UI element, the power on command, and the power off command. The input unit 190 may be implemented as a button, a motion recognition apparatus, a speech recognition apparatus, and the like. The function of the input unit 190 may be replaced by the remote control apparatus 200.

The control unit 120 controls the general functions of the display apparatus 100. The operation of the control unit 120 will be described below in detail with reference to the accompanying drawings.

The control unit 120 may control the display unit 110 to display the UI element when a preset event is generated before a power on command. Further, when the power on command is input while the UI element is displayed, the control unit 120 may control the display unit 110 to stop the display of the UI element and display the image contents.

According to the exemplary embodiment, the preset event may be reception of the motion information of the remote control apparatus 200 from the remote control apparatus 200 connected to the display apparatus 100. For example, if the user performs the operation of picking up or touching the remote control apparatus 200, the remote control apparatus 200 may sense the motion of the remote control apparatus 200 or the user input to transmit the motion information. The remote control apparatus 200 may also transmit the control command corresponding to the motion information.

Further, the preset event may be the sensing of the user's motion or the voice command by the display apparatus 100. For example, the display apparatus 100 may include a camera sensing the user's motion. When the camera senses that the user approaches the display apparatus 100 or the camera senses the preset user's motion, the control unit 120 may determine that the preset event is generated. When the event of recognizing the user's voice is set, the control unit 120 may control the display unit 100 to display the UI element and may control the display unit 100 to change the information included in the UI element depending the preset kind of voice. For example, when a voice or speech of "Hello" is input, the control unit 120 may determine that the preset event is generated. If a voice "Weather" is input, the control unit 120 may control the display unit 110 to display the UI element including weather information among various UI elements. Further, when a voice "Movie" is input, the control unit may control the display unit 110 to display the UI element including recommended movie contents.

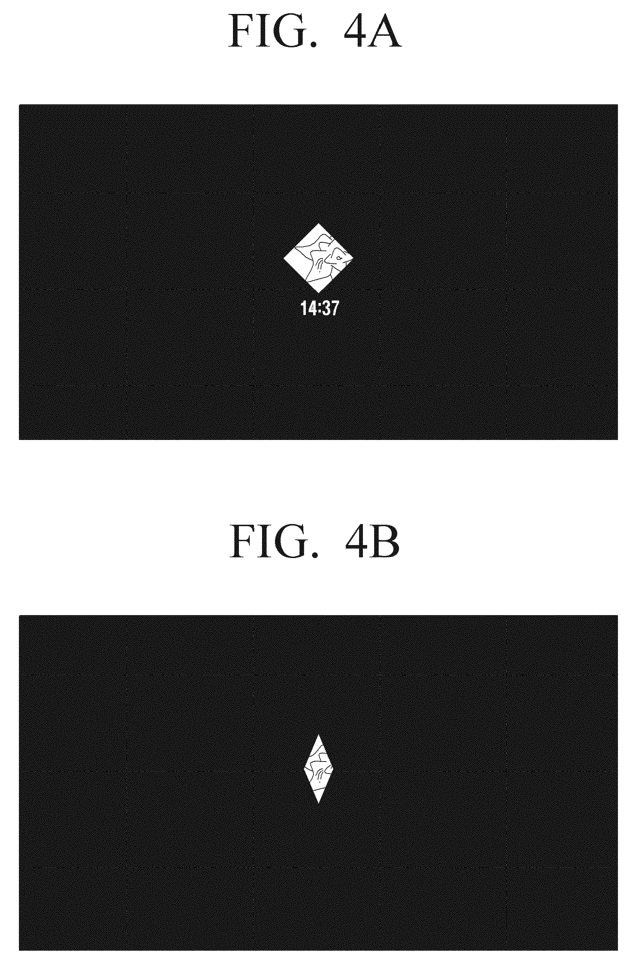

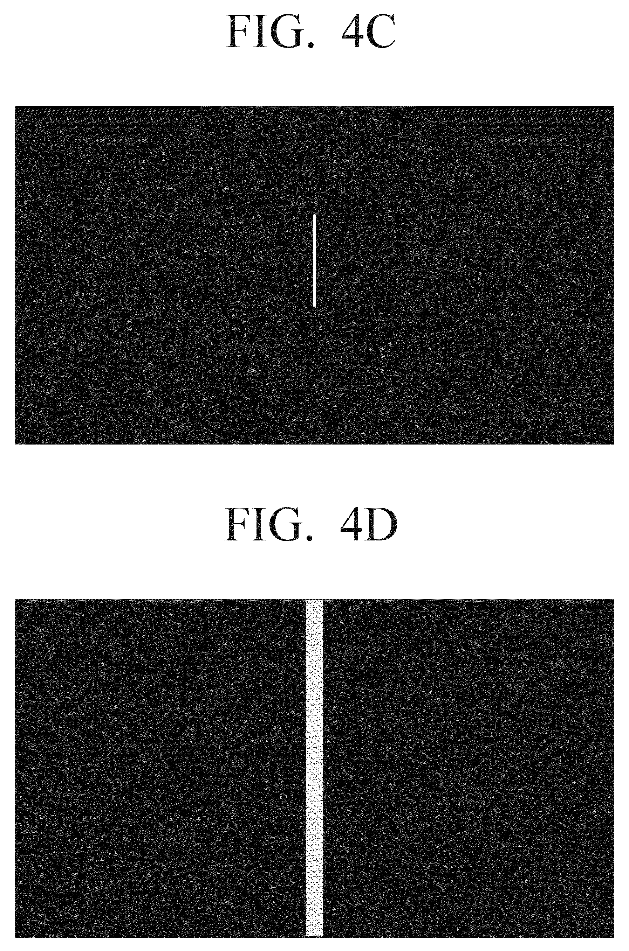

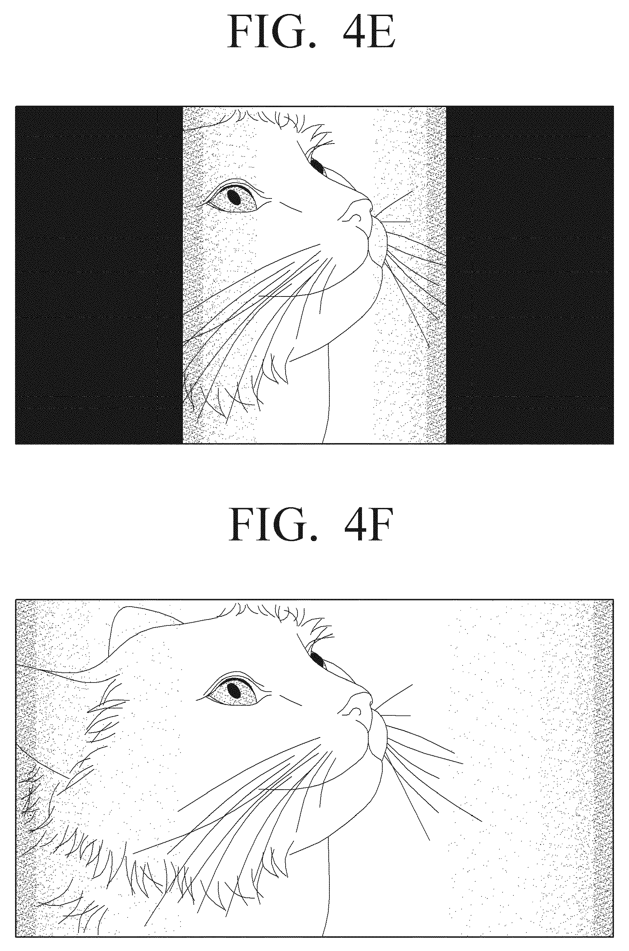

When the power on command is input while the UI element is displayed, the control unit 120 may control the display unit 110 to display the image contents. FIGS. 4A to 4F are diagrams for describing a transition of the state in which the UI element is displayed changing into the state in which the image contents are displayed, for example a fade-in transition. FIG. 4A illustrates another transition example in which a screen on which the preset event is generated and thus the UI element is displayed. The UI element including a diamond-like graphic object corresponding to weather information and time information is displayed at a central portion of the screen. As such, when the power on command is input while the UI element is displayed, the control unit 120 may control the display unit 110 to stop the display of the UI element. To naturally switch the screen, the control unit 120 may control the display unit 110 to pass through an intermediate process as an example illustrated in FIGS. 4B to 4E. First, as illustrated in FIGS. 4B and 4C, the control unit 120 may control the display unit 110 to display the UI element in a line form while the UI element is collected to a center. Next, as illustrated in FIGS. 4D and 4E, the control unit 120 may control the display unit 110 to gradually display the image contents while the UI element changed to the line is split. FIG. 4F is a diagram after the image contents are displayed in the whole region or the entirety of the display of the display unit 110.

In addition, a method for switching the screen displaying the UI element to the screen displaying the image contents may be variously implemented. For example, the UI elements may not be joined vertically, but may be combined horizontally. Alternatively, the screen may also be switched so that the UI element may be displayed to be gradually faded and the image contents displayed on the rear thereof may be displayed in an overlapping manner. If the display apparatus 100 has an edge type display unit 110, the UI element displayed at the center of the display unit 110 may be displayed while moving to the edge portion. In this case, the display of the UI element does not stop but the UI element may be displayed simultaneously with the image contents. The reason is that the edge type display apparatus does not hinder a user to view the image contents even if the UI element is displayed together.

When the preset time elapses after the UI element is displayed, the control unit 120 may control the display unit 110 to stop displaying the displayed UI element. For example, when the UI element is displayed and then the power on command is not input for 15 seconds, the control unit 120 may control the display unit 110 to stop the display of the UI element, using, for example a fade out transition. Since the case in which the power on command is not input for the preset time may correspond to the case in which the user generates the preset event for the purpose of confirming only the information displayed in the UI element, displaying the UI element for only the time enough to confirm the information is appropriate in terms of power.

When the preset event is additionally generated or occurs again in the state in which the UI element is displayed, the control unit 120 may reset a time count to stop the display of the UI element. For example, when the user performs the operation of picking up the remote control apparatus 200 to display the UI element, if the user performs an operation of continuously shaking the remote control apparatus 200, the control unit 120 may control the display unit 110 to keep the display of the UI element.

When a preset second event is generated to display the UI element, the control unit 120 may control the display unit 110 to change the displayed UI element. For example, when the user wants to know traffic information in the case in which or when the UI element providing weather information is displayed at an early time, there is a need to change the UI element so that the UI element providing the traffic information is displayed. The preset second event may be at least one of the connection with the external server, the reception of the UI element change command, the reception of the direction change command, and the reception of the motion information. For example, when an operation of letting the remote control apparatus 200 point to the right is input, the control unit 120 may determine that the preset second event is generated. Therefore, the control unit 120 may control the display unit 110 to display different kinds of UI elements.

The control unit 120 may control the display unit 110 not to display the UI element even if the preset event is generated after the power on command is input and the image contents are displayed. Even if there is an operation of moving the remote control apparatus 200 while the user views the image contents, this is to allow the display unit 110 to prevent the UI element which may disturb viewing from being displayed. For example, the control unit 120 may disregard the control command received from the remote control apparatus 200. The remote control apparatus 200, the motion recognition apparatus, or the like does not read or detect a signal indicating that the preset event is generated, the control unit 120 may prevent the UI element from being displayed while the user views the image contents. As another example, the remote control apparatus 200 may not transmit the signal. This will be described in detail in the description portion of the remote control apparatus 200.

However, there may be a case in which the user's intention wants to receive the UI element while the user views the image contents. In this case, it is appropriate to set an event which may clearly know the user's intention such as an operation of pressing a specific button, etc., not a simple operation.

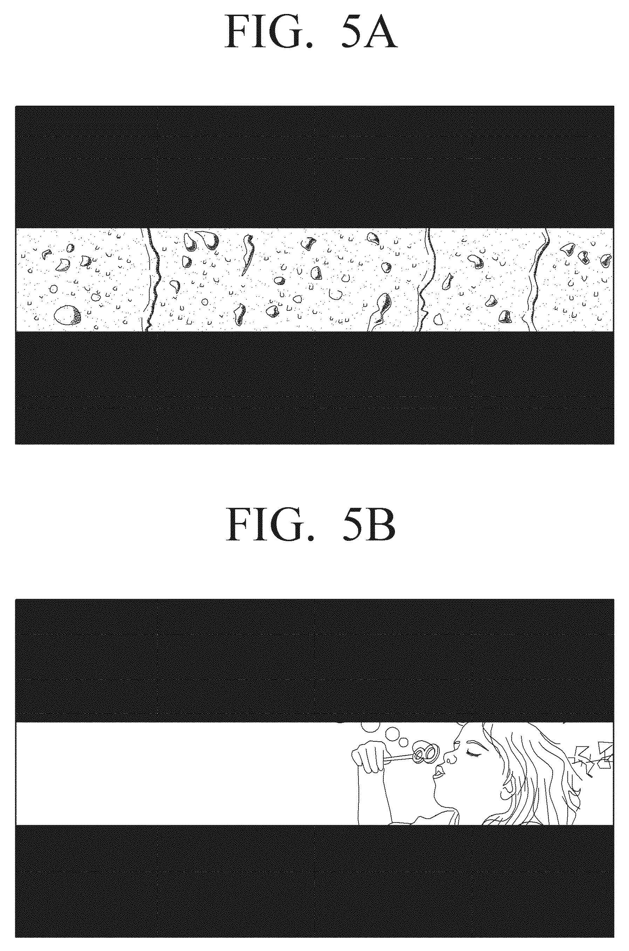

FIGS. 5A to 5K are diagrams illustrating various kinds of UI elements.

FIGS. 5A and 5B are diagrams illustrating a UI element represented by a graphic object corresponding to weather information. The control unit 120 may provide real-time weather information when the preset event is generated to display the UI element. As illustrated in FIG. 5A, in the case of rainy weather, the UI element may be a graphic object which shows a window with rainwater running down. In addition, the control unit 120 may provide the sound of rain together with the image. Compared with the weather information provided by a text, the user may more intuitively know the weather information. The example in which the weather information is provided by the text may also be present. FIG. 5B is a diagram illustrating the UI element represented by the graphic object through which the user may intuitively know that it is fine weather. The graphic object may be a moving picture as well as a photograph. For example, the UI element of FIG. 5B may be a UI element which provides a moving picture of contents about taking a walk in fine weather and rhythmical music.

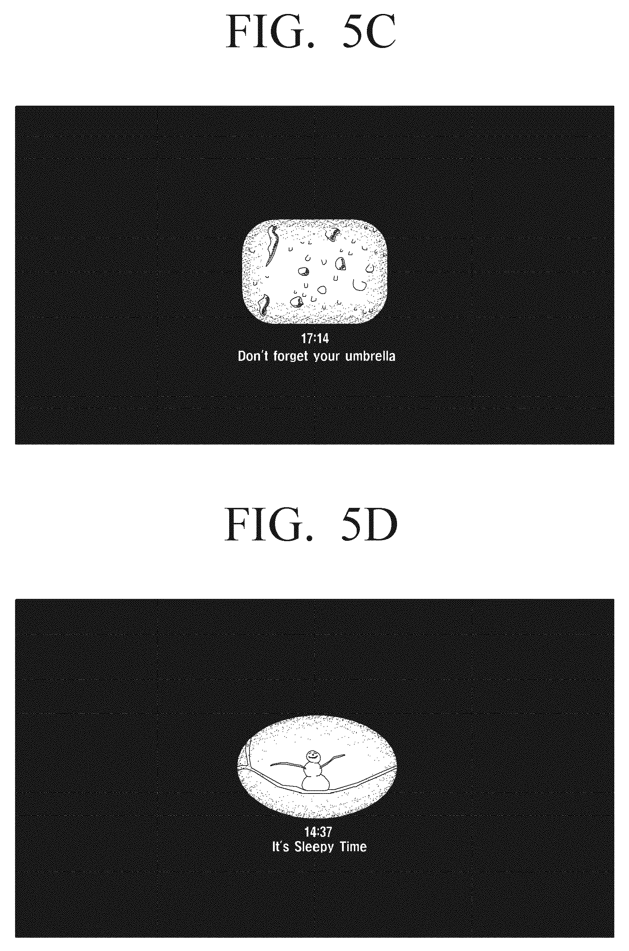

FIGS. 5C and 5D are diagrams illustrating a UI element including weather information, time information, and a message together. Referring to FIG. 5C, a rainy image, time information, and a message "Don't forget your umbrella" are displayed together. The display apparatus 100 according to the exemplary embodiment may give more intuitive and emotional user experiences to the user by including a message corresponding to real-time information in the UI element. FIG. 5D is a diagram illustrating a UI element displayed when the preset event is generated on weekend afternoon when it snows. Referring to FIG. 5D, a snowman-like graphic object corresponding to snowy weather, time information indicating 14: 37, and a message "It's sleepy time" which is a message corresponding to information "lazy afternoon" are displayed together.

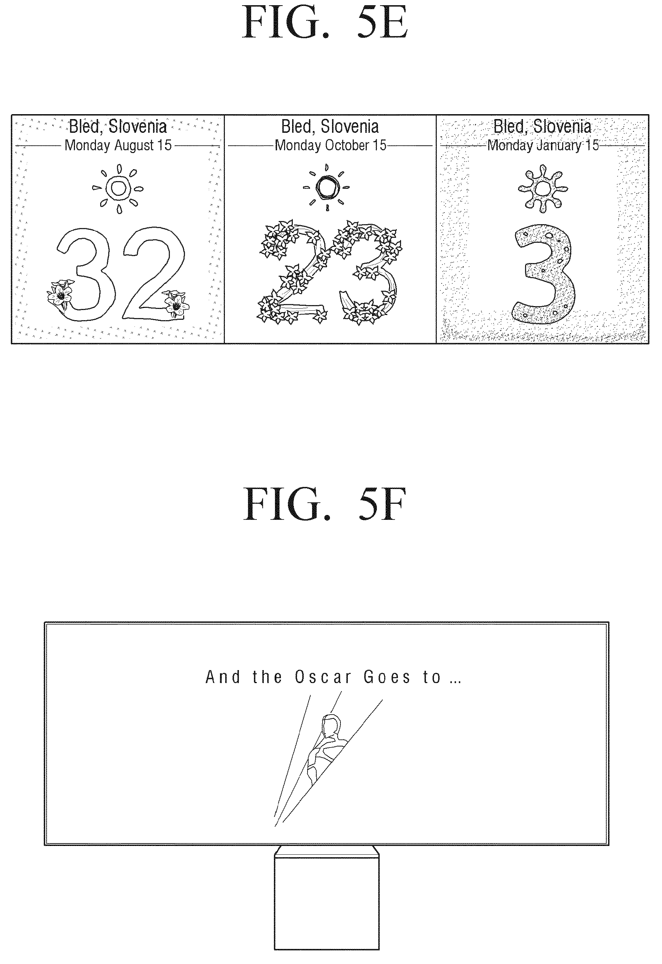

FIG. 5E is a diagram illustrating a UI element providing weather information in a graphic object form. Referring to FIG. 5E, a graphic object corresponding to temperature, local information showing weather, and date information are displayed. In particular, the control unit 120 changes a graphic element of numbers indicating temperature and displays the graphic element to enable the user to intuitively recognize the temperature. For example, the control unit 120 controls the display unit 110 to display numbers of which the surfaces are covered with thick grass in the case of 32 °C which is hot weather and controls the display unit 110 to display numbers of which the surfaces are covered with ice in the case of 3 °C which is cold weather.

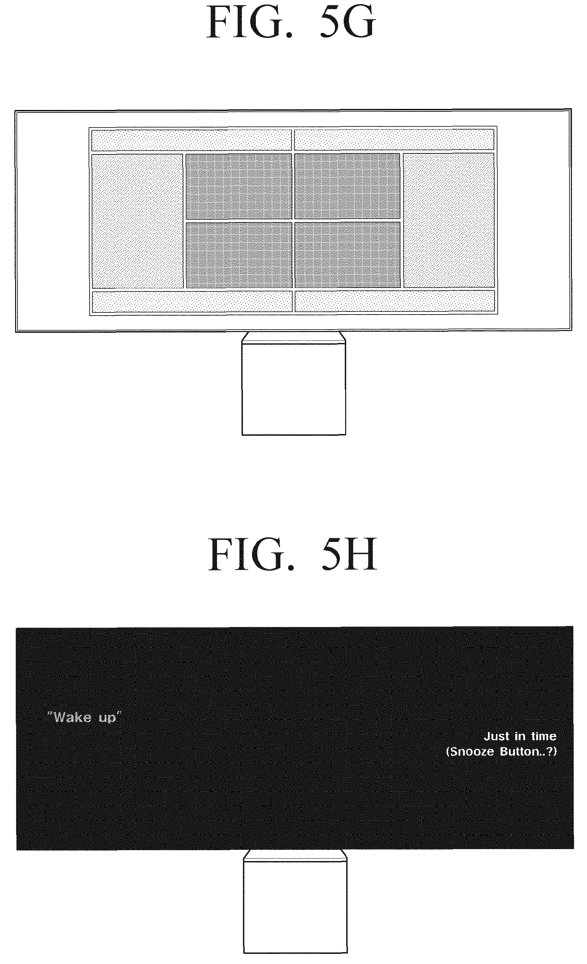

When a date at which the preset event is generated is a special day such as holiday (ex. Christmas), Election day, and the World Cup opening day, the UI element may be a graphic object represented by info graphic. FIG. 5F is a diagram illustrating when a preset event is generated on Oscar award ceremony day. FIG. 5G is a diagram illustrating when a preset event is generated on a final day of the Wimbledon tennis tournament. In addition, in the case of Christmas, Santa and a tree may be displayed and in the case of the World Cup opening day, a soccer ball and the World Cup trophy may be displayed. Further, the control unit 120 may have each anniversary (ex. birthday, wedding anniversary) for each previously set therein. A special birthday greeting display on the user's birthday may be displayed. The control unit 120 may also use a photograph pre-stored in the storage unit 170 by the user as a graphic object.

FIG. 5H is a diagram illustrating a UI element which may give a user experience like conversation with the display apparatus 100. When the preset event is generated, the control unit 120 may control the display unit 110 to display a text of a query of the user. The control unit 120 may determine a nature of a user's response is by using the motion information of the remote control apparatus 200, the user's motion information, the user's voice information, etc. The control unit 120 may control the display unit 110 to display a new text corresponding to the determined user's response. The interactive UI element may also provide only an interesting user experience and may also provide a user experience of setting a specific function of the display apparatus 100 through a conversation.

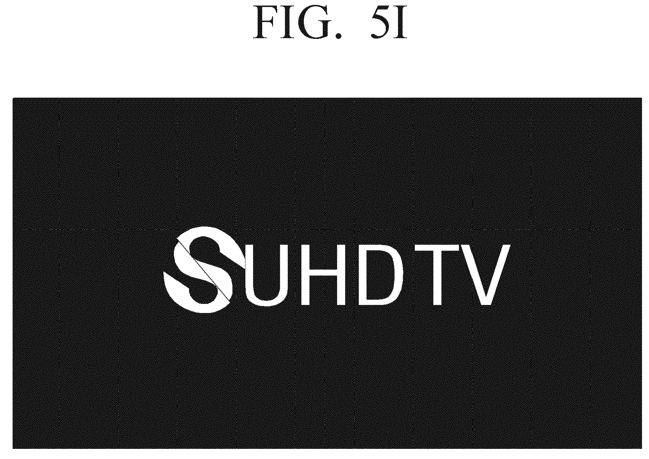

When the display apparatus 100 may not receive real-time information or does not have a graphic object representing various UI elements, a product logo pre-stored in the storage unit 170 may also be displayed as a UI element. UI elements preferred by each user may be different. Therefore, the product logo may be set to be displayed as the UI element at the time of selling the product. Next, the control unit 120 may be set to display a desired kind of UI element depending on the setting of the user. For example, FIG. 5I is a diagram illustrating a logo of Samsung UHD TV displayed as a UI element. When the power on command is input while the UI element is displayed, the control unit 120 may control the display unit 110 to display the image contents along with a visual effect that portion 'S' is split.

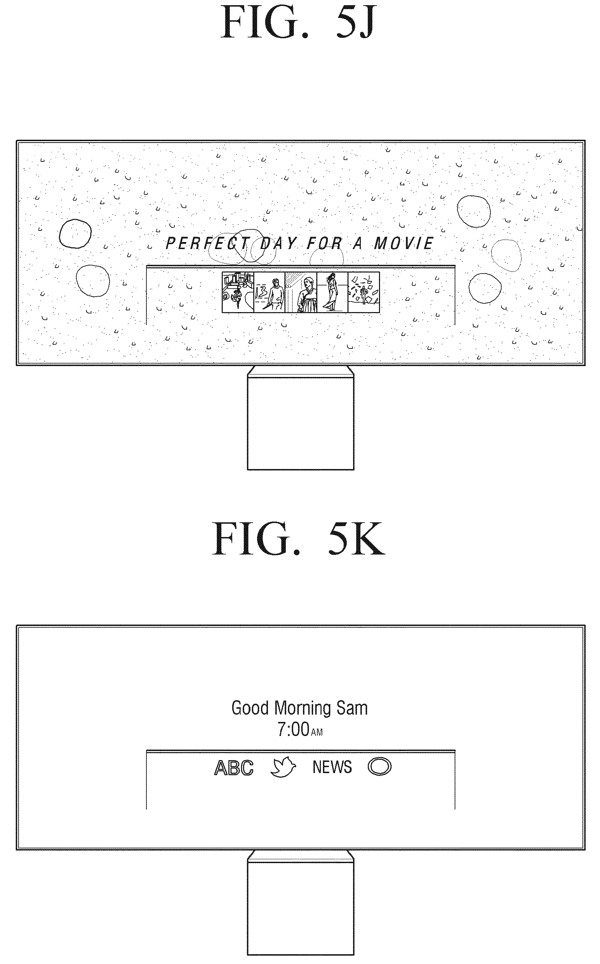

FIG. 5J is a diagram illustrating a UI element providing recommendation image contents. The control unit 120 may analyze user's preferred information, latest movie information received from the external server, recommendation movie information depending on weather, etc., to generate a recommendation image contents list. FIG. 5K is a diagram illustrating a UI element including a connectable service shortcut icon. For example, when the Internet connection is made, the control unit 120 may control the display unit 110 to display an icon connected to SNS services, such as twitter and facebook, as a UI element. In addition, the UI element may be a graphic object corresponding to various types of information such as traffic information.

The display apparatus 100 according to the exemplary embodiment may display the UI element providing various types of information before the user views the image contents to enable the user to conveniently obtain the desired information. Like the related art, the display apparatus 100 may provide various user experiences in addition to viewing the image contents while providing the user experience providing the image contents. For example, when the user wants to know today's weather and current traffic situations before he/she goes to work, the user may receive the desired information from the display apparatus 100 only by picking up and shaking the remote control apparatus 200.

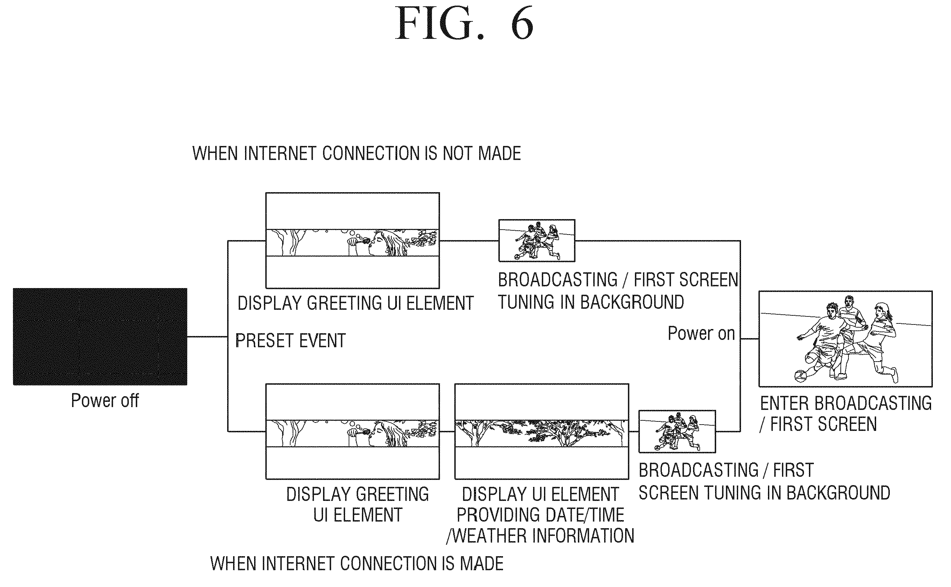

FIG. 6 is a diagram for describing features of changing and providing the UI element depending on the connection state with the external server. In FIG. 6, only when the image contents are a broadcasting signal will be described as an example. When the preset event is generated in the state in which the power supply of the display apparatus 100 is turned off, the control unit 120 may control the display unit 110 to display the UI element displaying a greeting message. In this case, the display apparatus 100 may not be in the state in which the power supply is completely turned off but may be in the SRPO state. The display apparatus 100 may more quickly display the UI element when it displays the UI element in the SRPO state.

When the Internet connection is not made or available, the display apparatus 100 may not obtain real-time information such as weather information or traffic information. Therefore, the broadcasting signal may be tuned in a background while only the UI element displaying the greeting message is continuously displayed. Next, when the power on command is received while the UI element is displayed, the control unit 120 may control the display unit 110 to display the broadcasting contents.

When the Internet connection is made or is available, the control unit 120 may control the display unit 110 to display the UI element displaying the greeting message while finding and/or receiving the real-time information required to generate the UI element. Further, when the UI element providing date/time/weather information is prepared, the control unit 120 converts the UI element from the greeting message to the graphic object corresponding to the real-time information. Similarly, the control unit 120 may tune a broadcasting signal in a background operation. Next, when the power on command is received while the UI element is displayed, the control unit 120 may control the display unit 110 to display the broadcasting contents. The reason for tuning to the broadcasting signal in the background operation is that when the power supply is turned off and thus the display apparatus 100 enters the SRPO state, a power supply for a tuning unit (not illustrated), etc., is completely turned off, such that it takes time to tune the broadcasting signal.

Even if the power on command is input, the control unit 120 may control the display unit 110 to keep or maintain the display of the UI element until it is ready to display the image contents and then display the image contents. For example, in FIG. 6, even if the power on command is input, when the tuning to the broadcasting signal is not completed, the control unit 120 performs a control not to immediately switch the screen. When the tuning of the broadcasting signal is completed and the broadcasting contents may be directly displayed, the control unit 120 switches the screen from the UI element to the image contents. This is similarly applied to a source such as HDMI as well as the broadcasting signal.

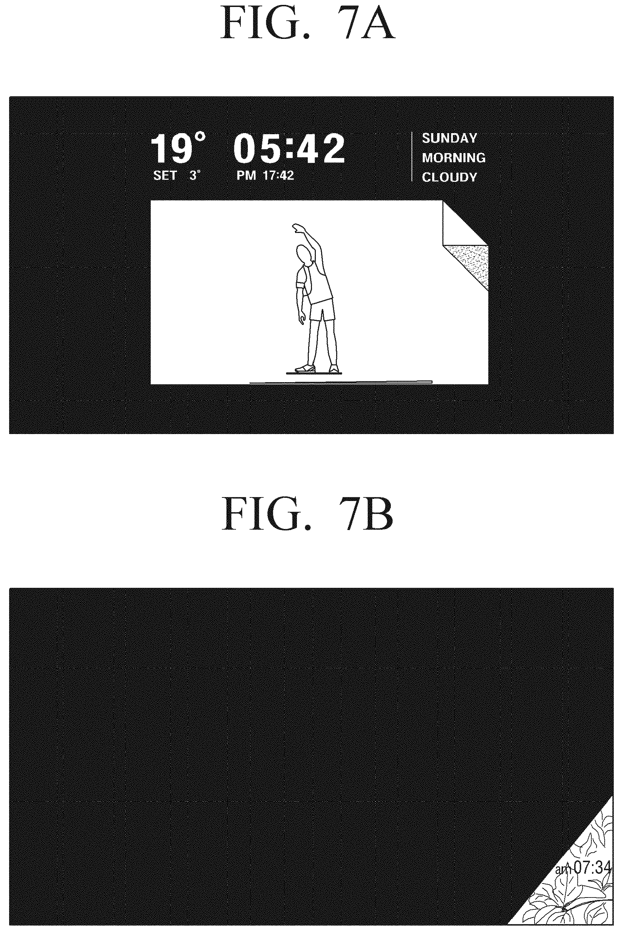

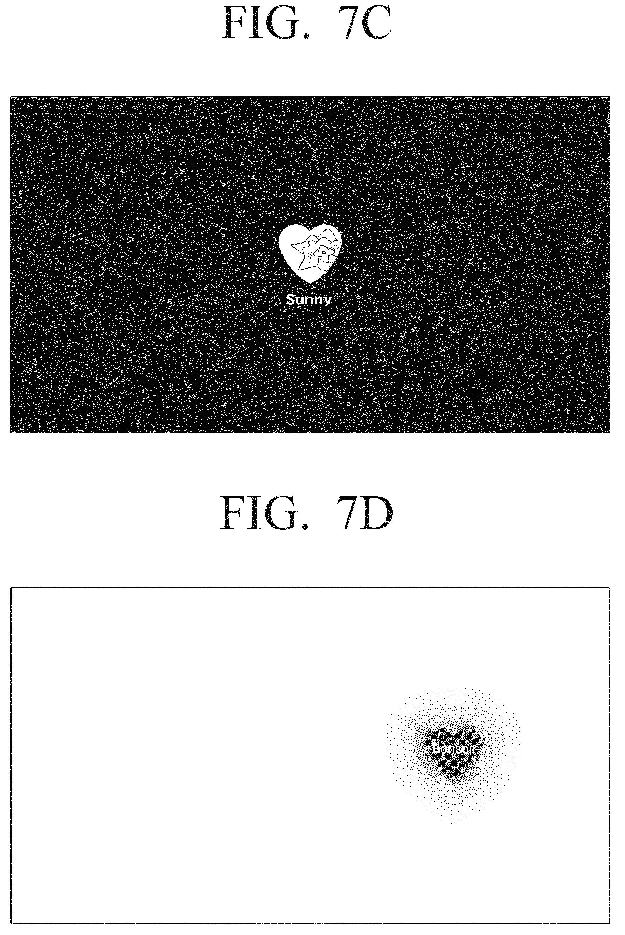

The control unit 120 may control the display unit 110 to display the UI element only in a region of the screen on which the image contents are displayed. This is for the user to intuitively differentiate the case in which or when the image contents are displayed and the case in which or when the UI element is displayed. FIGS. 7A to 7D are diagrams illustrating an example in which the UI element is displayed in a region of the screen on which the image contents are displayed, according to various exemplary embodiments. In FIG. 7A, the control unit 120 may control the display unit 110 to display the UI element at the center of the screen. A text corresponding to time information, weather information, the weather information and a graphic object of a motion appearance corresponding to the weather information is displayed in a central region of the screen. In FIG. 7B, the control unit 120 performs a control to display the UI element in a corner of the screen. In this case, a user experience like glancing at the screen is provided. FIG. 7C is a diagram illustrating when the UI element is displayed in a small region of the center and FIG. 7D is a diagram illustrating when a UI element showing greetings displayed at a position corresponding to a position to which the remote control apparatus 200 points.

As another example, in the case of the display apparatus 100 having the edge type display unit 110, the control unit 120 may control the display unit 110 to display the UI element in an edge region of the display unit 110. When the UI element is displayed in the edge region, even when the power on command is received and thus the image contents are displayed, the UI element may be displayed without stopping.

According to the exemplary embodiment, the power on command may be at least one of the power state transition command, the source selection command, and the channel change command. For example, when the power state transition command is input while the UI element is displayed, the control unit 120 may perform a control to display the image contents displayed before the power supply of the display apparatus 100 is turned off on the display unit 110. When a power button of the remote control apparatus 200 is pressed and when a power button of the display apparatus 100 is pressed, and when the display apparatus 100 recognizes a preset user's motion or voice, etc., the power state transition command may be generated. Describing, for example, the case in which the image contents displayed before the power off are video on demand (VOD) image contents, when the power button of the remote control apparatus 200 is pressed while the UI element is displayed, the control unit 120 may control the display unit 110 to display the VOD image contents.

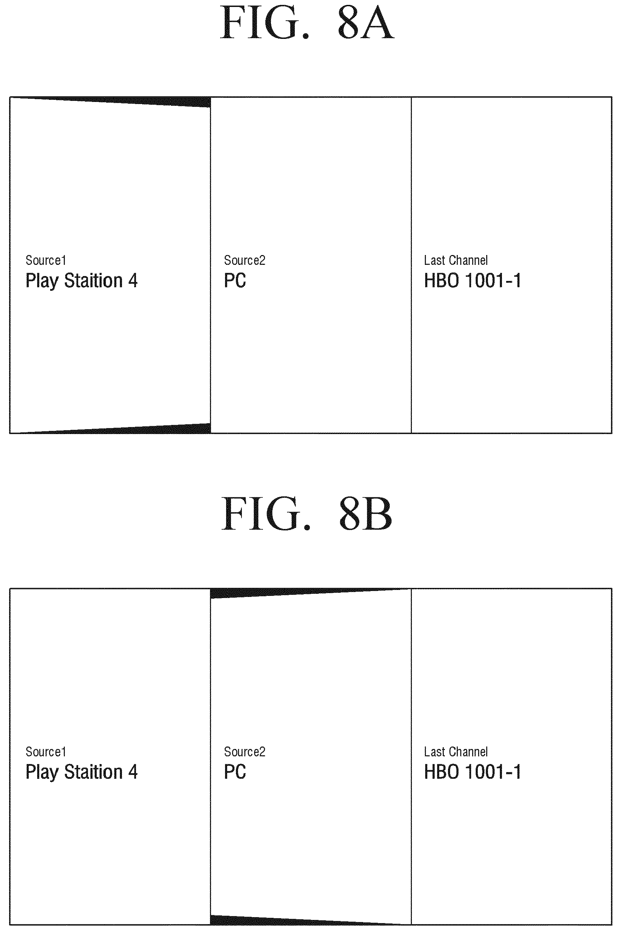

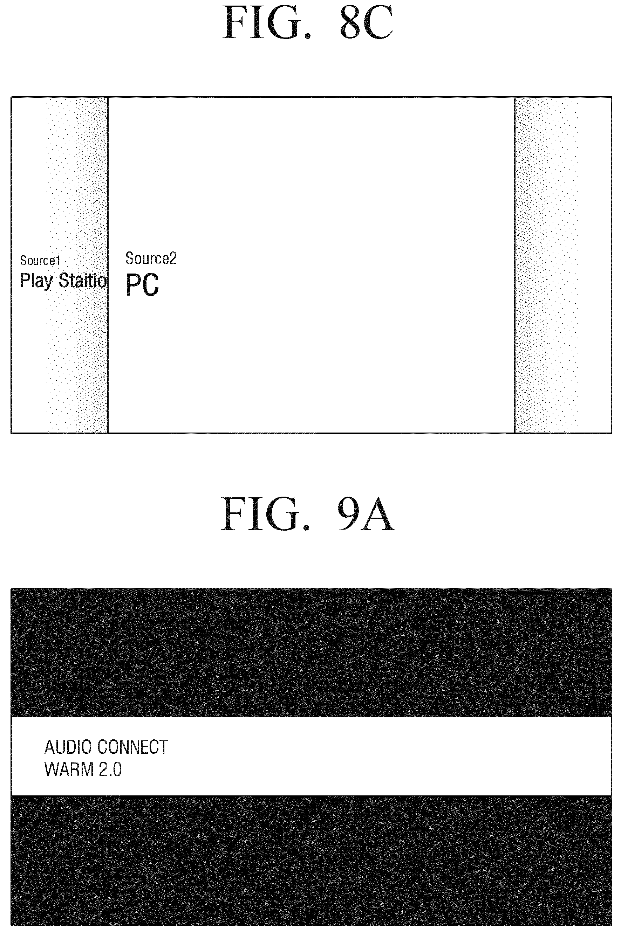

As another example, when the source selection command is input while the UI element is displayed, the control unit 120 may control the display unit 110 to display the image contents corresponding to the input source selection command. When an external input button of the remote control apparatus 200 is pressed, the source selection command may be generated. As another example, when the source selection command is input while the UI element is displayed, the control unit 120 may control the display unit 110 to display a source selection screen as illustrated in FIGS. 8A to 8C. FIG. 8A is a diagram corresponding to an initial screen transferred to the source selection screen. In the case in which a finally used source before the power supply of the display apparatus 100 is turned off is a play station 4 corresponding to a source 1, the control unit 120 may control the display unit 110 to provide the visual effects that the part of the UI element where the play station 4 is displayed is partially inclined at portion where the play station 4 of FIG. 8A is displayed. FIG. 8B is a diagram illustrating when the source is changed to a PC. As illustrated in FIG. 8C, when a command to establish or select the source selection is received, the control unit 120 may control the display unit 110 to display the image contents input from the selected source along with the visual effect that the part of the UI element corresponding to the command to establish the source selection is spread left and right.

As another example, when the channel change command is input while the UI element is displayed, the control unit 120 may control the display unit 110 to display the image contents corresponding to the input channel change command. For example, when the channel selection command is input by pressing an alphanumeric button instead of the power button of the remote control apparatus 200, the control unit 120 may control the display unit 110 to display the broadcasting contents of the corresponding channel.

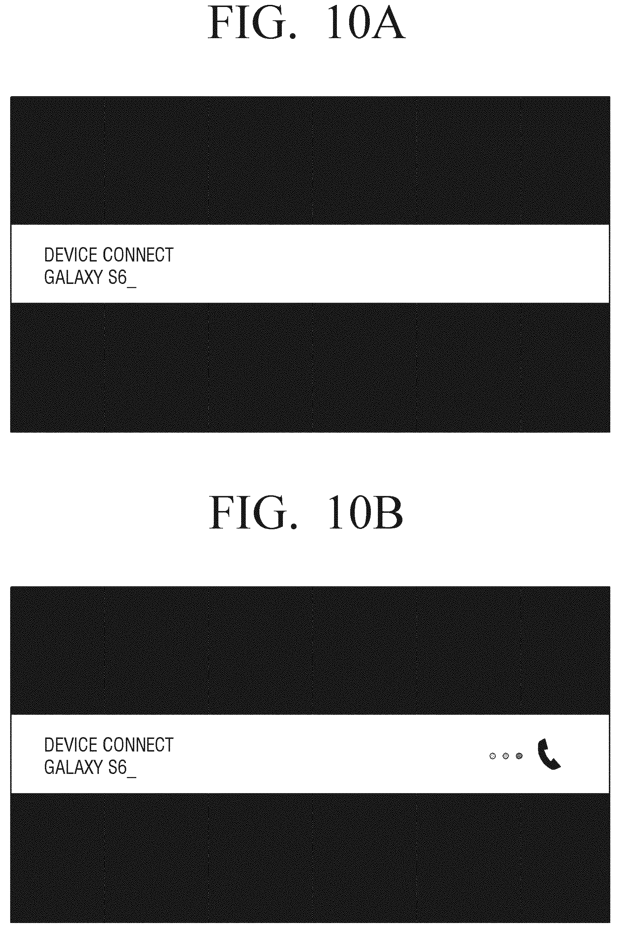

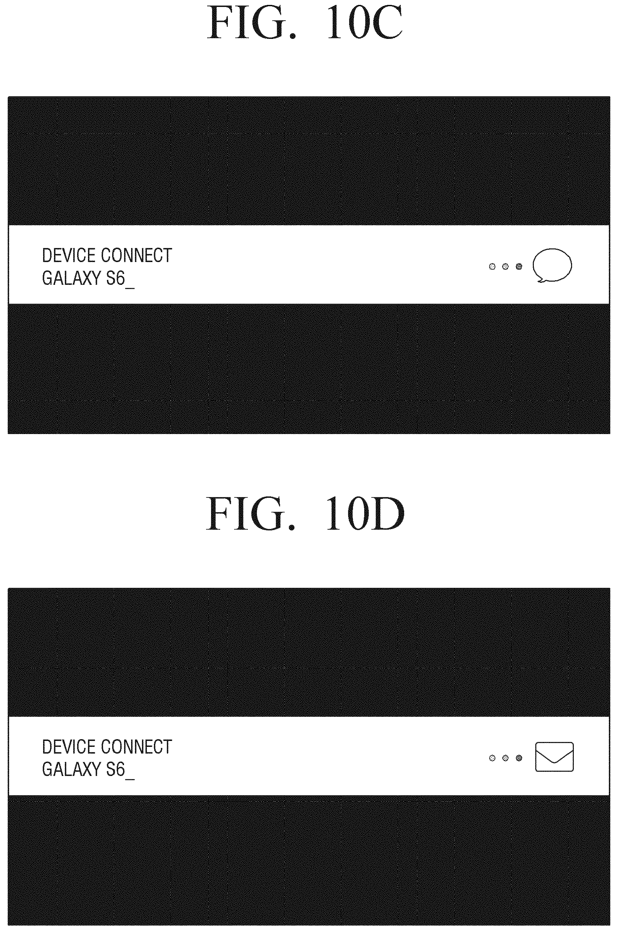

The display apparatus 100 according to the exemplary embodiment may perform a function while being connected to the external apparatus. FIGS. 9A to 9C are diagrams illustrating when the display apparatus 100 is connected to an audio apparatus and FIGS. 10A to 10D are diagrams illustrating when the display apparatus 100 is connected to a smart phone.

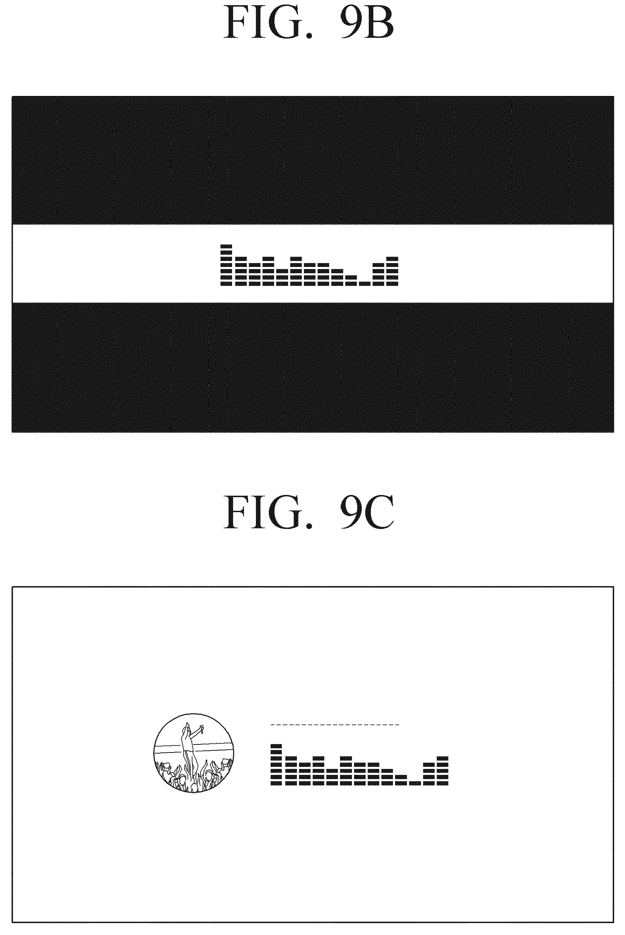

As illustrated in FIG. 9A, when the display apparatus 100 is connected to the audio apparatus before receiving the power on command, the control unit 120 determines that the preset event is generated to display the UI element informing about the information of or describing the connected audio apparatus. The display apparatus 100 may be connected to the audio apparatus by Bluetooth (BT), WiFi, etc. Next, when the connection situation is continued for a predetermined time, as illustrated in FIG. 9B, an equalizer and additional information of the audio apparatus are displayed as the UI element. When the power on command is received in the state in which the audio apparatus is connected, the control unit 120 may determine that the audio apparatus is selected as the source to control the display unit 110 to display the screen as illustrated in FIG. 9C.

As illustrated in FIG. 10A, when the display apparatus 100 is connected to the smart phone through or via the BT signal before receiving the power on command, the control unit 120 may determine that the preset event is generated to control the display unit 110 to display the UI element informing the information of the connected smart phone. Next, when the preset time elapses, the control unit 120 may control the display unit 110 to stop the display of the UI element.

As illustrated in FIGS. 10B to 10D, when the connected smart phone receives a telephone call, a text message, and an e-mail, the control unit 120 may determine that the preset event is generated or has occurred to control the display unit 110 to display the UI element providing related event notification information.

The provision of the user experience before the user views the image contents has been described above based on the display of the UI element before the power on command. On the contrary, the user experience after the user views the image contents may also be provided by displaying the UI element or providing the specific function after the power off command is issued.

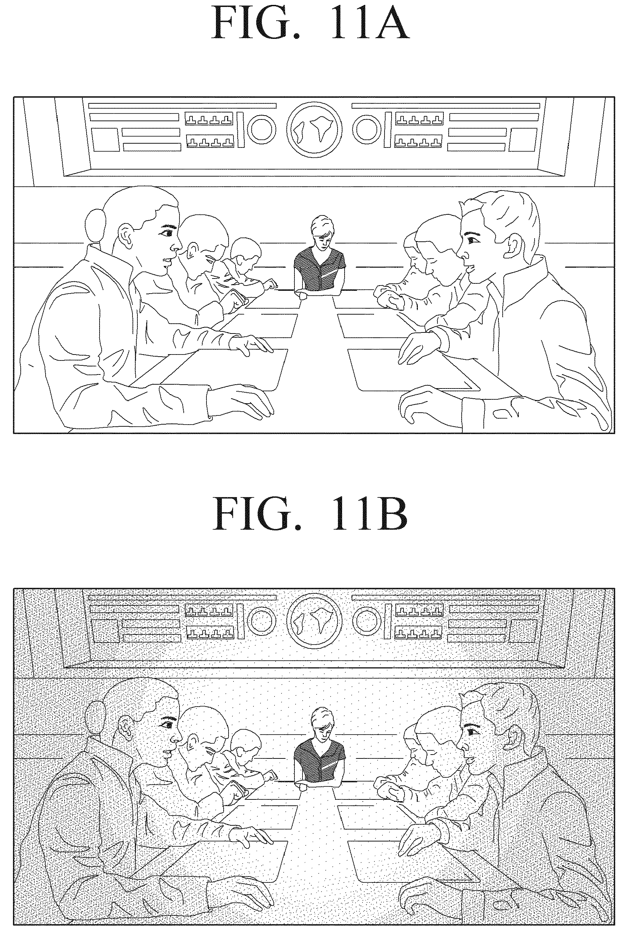

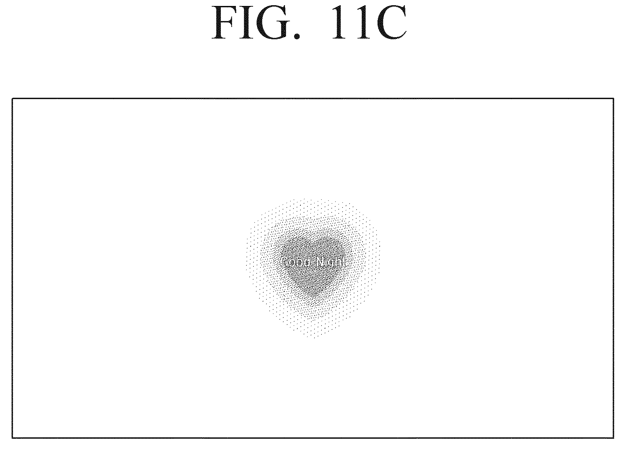

FIGS. 11A to 11C are diagrams for describing features of extracting the dominant color after the power off command and providing a message having the dominant color. When the power off command is received, the control unit 120 extracts the dominant color from the screen when receiving the power off command. Further, the control unit 120 may control the display unit 110 to display the message having the extracted dominant color. For example, the screen illustrated in FIG. 11A is a screen displayed when the power off command is received. The dominant color of the whole screen illustrated in FIG. 11A is an orange color. When receiving the power off command, the control unit 120 may also control the display unit 110 to let or make the image content screen gradually disappear as illustrated in FIG. 11B. As illustrated in FIG. 11C, the control unit 120 may control the display unit 110 to provide a message called "Good night" of an orange color which is the dominant color while the image content screen disappears.

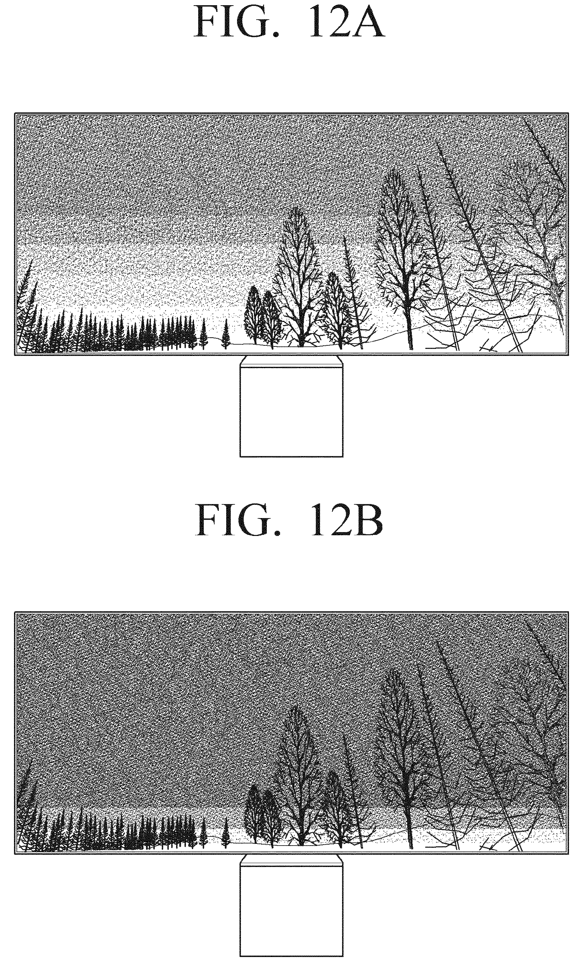

FIGS. 12A and 12B are diagrams for describing a function of providing illumination in some region of the display unit 110 for the preset time after the power off command is received. When receiving the power off command while the image contents are displayed as illustrated in FIG. 12A, the control unit 120 sequentially turns off a power supply from the top of the display unit 110 to the bottom thereof to provide the visual effects that the screen is closed as if the user closes his/her eyes. Further, as illustrated in FIG. 12B, the control unit 120 may control the display unit 110 to display a bright screen which may be used as illumination in some region of the display unit 110. The function of providing illumination is a particularly useful function when the user views the image contents in the state in which external illumination is turned off during the night and then turns off the display apparatus 100. Since the display apparatus 100 provides illumination for a predetermined time, the user may move without colliding with things even if he/she does not turn on the external illumination.

According to various exemplary embodiments of the display apparatus 100 as described above, the user may receive the UI element providing various types of information in the previous operation of inputting the power on command.

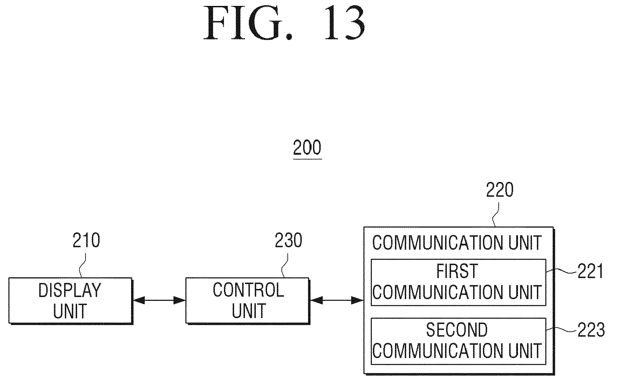

FIG. 13 is a block diagram for describing a configuration of the remote control apparatus 200 according to an exemplary embodiment. Referring to FIG. 13, the remote control apparatus 200 includes a sensor unit 210, a communication unit 220 and a control unit 230, such as a computer. The remote control apparatus 200 may be implemented as a smart remote controller. Further, the remote control apparatus 200 may be implemented as various apparatuses such as a pointing device, a touch pointer, a motion recognition apparatus, a speech recognition apparatus, and a mouse. For convenience of explanation, the case in which the remote control apparatus 200 is a remote controller will be described as an example.

The sensor unit 210 senses the motion of the remote control apparatus 200. The sensor unit 210 may include an acceleration sensor, an angular velocity sensor, and a geomagnetic sensor. The acceleration sensor senses a variation of speed by unit of time. The acceleration sensor may be implemented as a three axes device. When the accelerator sensor is implemented as a 3-axis acceleration sensor, the acceleration sensor includes X, Y, Z-axis acceleration sensors which are disposed in different directions and thus are may be orthogonal to one another. The angular velocity sensor senses a variation in a preset direction of the remote control apparatus 200 for over a unit of time to sense an angular velocity. The geomagnetic sensor is a sensor which may detect a flow of a magnetic field to detect an azimuth. The geomagnetic sensor may detect orientation coordinates of the remote control apparatus 200 and detect a direction in which the remote control apparatus 200 is disposed or pointing based on the orientation coordinates. The sensor unit 210 may also correct motion information, which is obtained by the accelerator sensor or the angular velocity sensor, using the geomagnetic sensor.

The communication unit 220 is configured as a wireless communication module to perform a wireless communication function with the external apparatus. The communication unit 220 may transmit the motion information of the remote control apparatus 200, etc., to the display apparatus 100. The communication unit 220 includes a first communication unit 221 performing unidirectional communication and a second communication unit 223 performing bidirectional communication. A wireless communication method used by the first communication unit 221 may be infrared (IR) communication and a wireless communication method used by the second communication unit 223 may be any one of Bluetooth (BT) communication, WiFi communication, and ZigBee communication.

The control unit 230 controls the general operation of the remote control apparatus 200. When the sensor unit 210 senses the motion of the remote control apparatus 200, the control unit 230 may control the communication unit 220 to transmit the control command to display the pre-registered UI element in the display apparatus 100 to the display apparatus 100 prior to transmitting the power on command for the display apparatus 100.

The control unit 230 may first transmit the control command through the first communication unit. The first communication unit may use an IR communication scheme, and therefore is the unidirectional communication and has directivity. For example, when the remote control apparatus 200 is touched for the user to display the UI element, the direction of the remote control apparatus 200 may not be directed to the display apparatus 100. In this case, there may be a problem in that the control command is not transmitted to the display apparatus 100 in terms of the directivity characteristics of the IR communication. Therefore, the control unit 230 is connected to the display apparatus 100 by the BT wireless method and then again transmits the control command through the second communication unit by the BT communication scheme. In the case of the BT communication, the transmission accuracy of the control command is guaranteed but the connection time required is longer, such that it may be difficult to obtain a response of immediately displaying the UI element. Therefore, the control unit 230 may control the communication unit 220 to first transmit the control command through the IR communication and again transmit the control command by the BT communication to prevent an error.

The control unit 230 controls the communication unit 220 to transmit the control command at each preset period. In particular, after the BT connection, the control unit 230 controls the communication unit 220 to transmit a BT signal at each preset period.

When the communication unit 220 receives the information that the display apparatus 100 displays the image contents, the control unit 230 may control the communication unit 220 to stop the transmission of the control command. To prevent the remote control apparatus 200 from consuming power unnecessarily, when the transmission of the control command to display the UI element is not necessary, the control unit 230 performs a control to stop the transmission of the control command. Further, when receiving the information that the power supply of the display apparatus 100 is turned off, the control unit 230 may control the communication unit 220 to again start the transmission of the control command.

The user may receive, through the remote control apparatus 200 as described above, the user experience of receiving various types of information before he/she views the image contents only by a simple operation of manipulating the remote control apparatus 200.

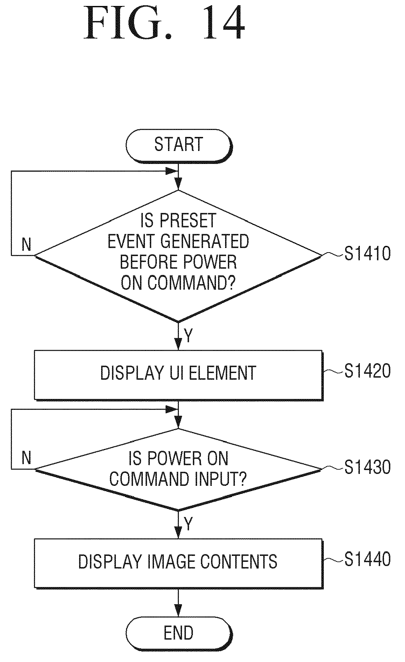

FIG. 14 is a flow chart for describing a method for controlling a display apparatus 100 according to an exemplary embodiment. First, the display apparatus 100 determines whether the preset event is generated or has occurred before the power on command (S1410). If it is determined that the preset event is not generated or has not occurred (S1410-N), the display apparatus 100 waits in a suspend state. On the contrary, if it is determined that the preset event is generated or has occurred before the power on command (S1410-Y), the display apparatus 100 displays the UI element (S1420). For example, the preset event may be the reception of the motion event information of the remote control apparatus 200 from the remote control apparatus 200 connected to the display apparatus 100. Further, the UI element may be the graphic object corresponding to one of time of day information, current date information, current traffic information, and current weather information. Next, when the power on command is input while the UI element is displayed (S1430-Y), the display apparatus 100 displays the image contents (S1440). Various exemplary embodiments of the method for controlling a display apparatus 100 overlap the description of the exemplary embodiment of the display apparatus 100 and therefore the description thereof will be omitted.

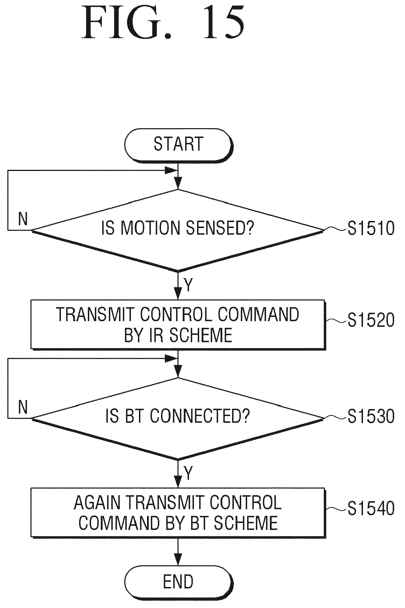

FIG. 15 is a flow chart for describing a method for controlling a remote control apparatus 200 connectable to the display apparatus 100 according to an exemplary embodiment. First, the remote control apparatus 200 determines whether the motion of the remote control apparatus 200 itself is sensed (S1510). The remote control apparatus 200 may sense a motion using a various kinds of sensors as previously discussed. Further, the remote control apparatus 200 may also sense a motion as well as whether an operation of touching the remote control apparatus 200 is present or has occurred by using the touch sensor. If the motion is sensed (S1510-Y), the remote control apparatus 200 transmits the control command by the IR scheme (S1520). For example, the control command may be a control command to display the pre-registered UI element in the display apparatus 100 prior to transmitting the power on command for the display apparatus 100 connected to the remote control apparatus 200. Next, it is determined whether the remote control apparatus 200 is connected to the display apparatus 100 by the BT (S1530). When the BT connection is completed (S1530-Y), the remote control apparatus 200 again transmits the control command to the display apparatus 100 connected to the remote control apparatus 200 by the BT scheme (S1540). Instead of the BT connection, other methods which may implement a bidirectional communication may also be used. Various exemplary embodiments of the method for controlling a remote control apparatus 200 overlap the description of the exemplary embodiment of the display apparatus 200 and therefore the description thereof will be omitted.

Further, a program code for executing the control method according to various exemplary embodiments as described above may be stored in various types of recording media. In detail, the program codes may be stored in various types of non-transitory recording media that is readable by a terminal, such as a random access memory (RAM), a flash memory, a read only memory (ROM), an erasable programmable ROM (EPROM), an electronically erasable programmable ROM (EEPROM), a register, a hard disk, a removable disk, a memory card, a universal serial bus (USB) memory, a compact-disk (CD) ROM, and the like.

Hereinafter, an interaction for executing functions of a display apparatus 100 according to another exemplary embodiment will be described. In addition, hereinbelow, for easier understanding, a state where a UI element is displayed between a power-off state and a power-on state will be described as a welcome mode. In addition, the case where a key input is received from the remote control apparatus 200 and perform corresponding operations by the display apparatus 100 will be assumed only. However, in case of a way to receive the input command may be various ways such as receiving motion information of the remote control apparatus 200, or recognizing a user's motion input by a camera of the display apparatus 100, or the like.

According to an exemplary embodiment, after the welcome mode is activated, when key input allocated to a specific function is received from the remote control apparatus 200, the display apparatus 100 may be shifted to a power-on state and at the same time, may execute a specific function immediately. After the welcome mode is activated, if a key input not allocated to a specific function is received from the remote control apparatus 200, the display apparatus 100 may be simply shift to a power-on state and may display image contents. Therefore, operation steps required for executing a specific function or content may be reduced, and thus, more convenient user experience can be provided.

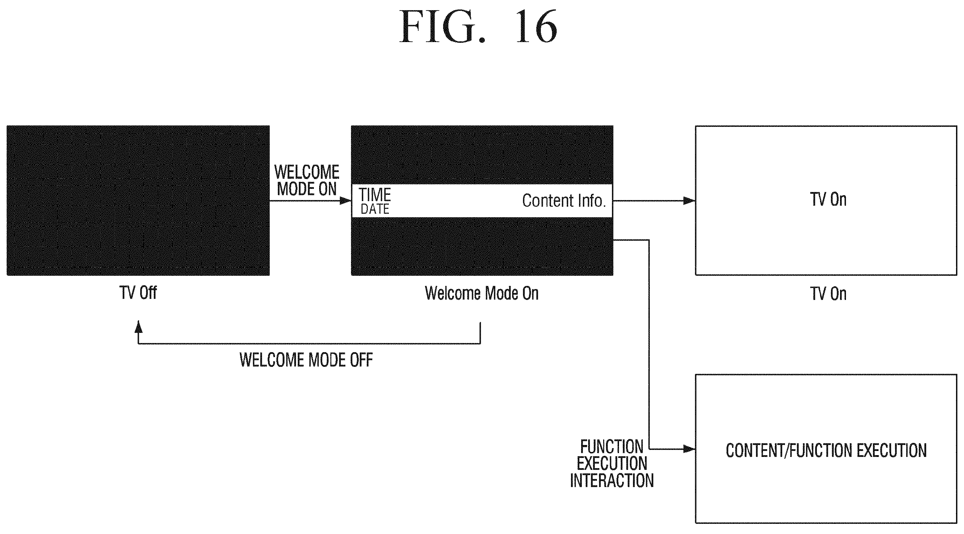

Referring to FIG. 16, the controller 120, when a preset event occurs prior to a power-on command, may control to activate a welcome mode which displays a UI element. For example, a preset event may be an event to lift the remote controller 200. After the welcome mode is activated, if a key input allocated to a specific function is received from the remote controller 200, the controller 120 may shift the display apparatus 100 to a power-on state, and at the same time, may control to execute a specific function immediately. If, after the welcome mode is activated, a key input not allocated to a specific function is received from the remote controller 200, the controller 120 may control such that the display apparatus 100 is merely shifted to a power-on state and display image contents.

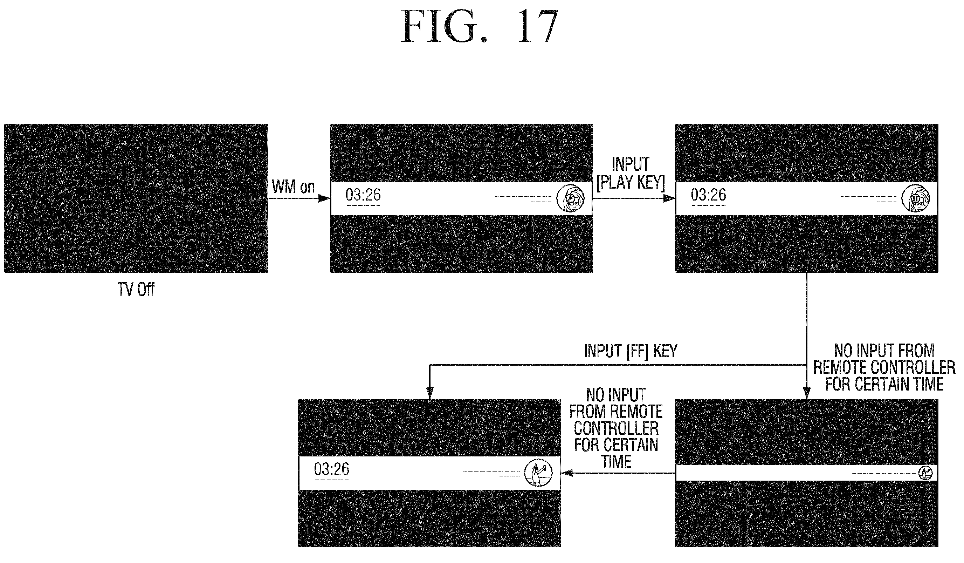

Hereinbelow, with reference to FIGS.17-26D, scenarios of interaction for executing functions of the display apparatus 100 will be described according to various exemplary embodiments. When a welcome mode is activated, what type of contents information will be displayed in the display unit 110 may be preset from a user, and it can be set such that frequently used/searched/detected contents information are displayed.

FIG.17 is a view illustrating an exemplary embodiment of providing music contents information in a welcome mode. Referring to FIG.17, the controller 120 may control the display unit 110 to display a UI element including music contents information when a preset event occurs before a power-on command. Music contents information may include at least one of thumbnail information, artist information, reproduction information, lyrics information, relevant music records information, and execution guide.

For example, the controller 120 may control the display unit 110 to display contents of music application installed in the display apparatus 100. As another example, the controller 120 may control the display unit 110 so as to display information on a channel of music which is basically installed on the display apparatus 100 or music received by the display apparatus 100.

After the welcome mode screen which includes music contents information is activated, when 'play' key input is received from the remote controller 200, the controller 120 may control the display apparatus 100 to reproduce music. In addition, when 'FF' key input is received from the remote controller 200, the controller 120 may control the display apparatus 100 to reproduce next music. In addition, during the preset time, when additional input is not received from the remote controller 200, the controller 120 may control the display unit 110 to simplify a screen providing various music contents information to display a music appreciation mode screen.

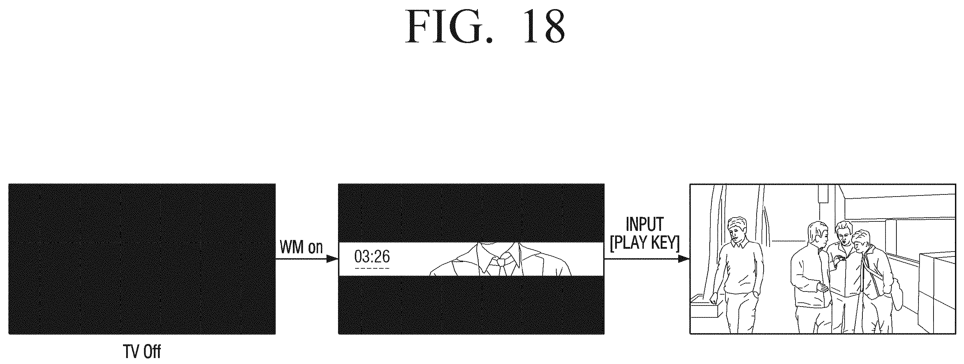

Fig.18 illustrates an exemplary embodiment to provide image contents information in a welcome mode. Referring to FIG.18, the controller 120, if a preset event occurs before the power-on command, may control the display unit 110 to display a UI element including image contents information. The image contents information may include at least one of poster information, title information, thumbnail information, provider information, actor information, and execution guide.

For example, the controller 120 may control the display unit 110 to display information on the recommended image contents provided from an application installed in the display apparatus 100, new image contents or 4K resolution image contents. As another example, the controller 120 may control the display unit 110 to display information on the image contents basically mounted in the display apparatus 100. As still another example, the controller 120 may control the display unit 110 to display promotion contents which are provided for a specific period of time. The promotion contents can be received through the communicator 160 or the like.

After the welcome mode screen including image contents information is activated, when 'play' key input is received from the remote controller 200, the controller 120 may control the display apparatus 100 to reproduce the image contents.

If a key input not related to image contents reproducing function is received from the remote controller 200, the controller 120 may control to shift the display apparatus 100 from welcome mode to a power-on mode regardless of information provided.

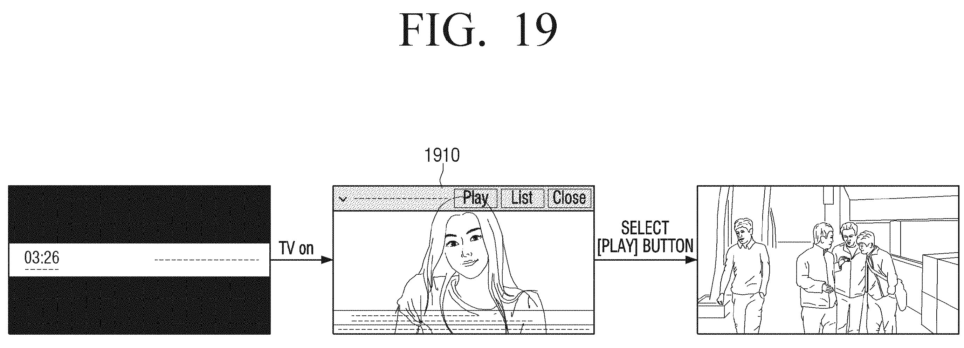

FIG.19 is a view illustrating an exemplary embodiment of providing a guide for image contents of which recording is recently completed. The first screen of FIG.19 is a screen that a welcome mode is activated. When recording of the image contents is completed, the controller may control the display unit 110 to display a UI element to notify that recording is completed. Then, if a power-on command is received, the controller 120 may control that the display apparatus 100 is in a power-on state. In addition, the controller 120, at the same time with displaying the image contents screen, may control the display unit 110 to display a notification message window 1910 indicating that there is a recorded image on a part of a screen along with displaying a screen. When a user command to select 'Play' button is received, the controller 120 may control the display apparatus 100 to reproduce the recorded image.

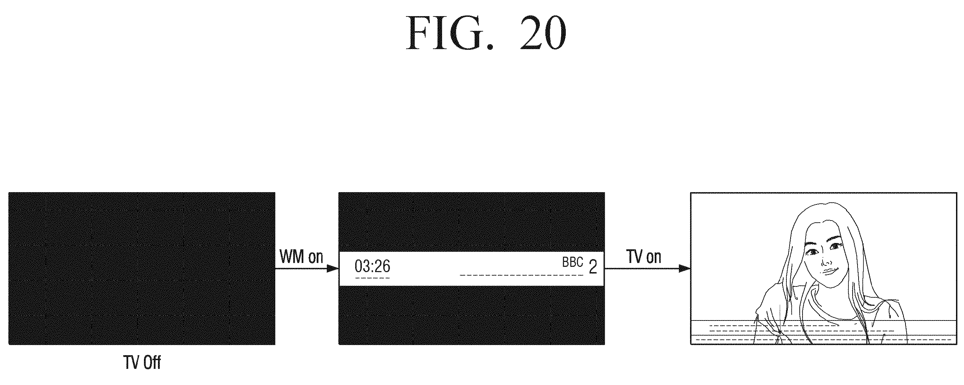

FIG.20 is a view illustrating an exemplary embodiment to provide lastly viewed TV channel information in a welcome mode. For example, the controller 120, when a preset event occurs prior to a power-on command, may control the display unit 110 to display a UI element which includes at least one of lastly-viewed channel name, channel number, lastly-viewed program name, currently-broadcasted program name, thumbnail of a channel screen. In addition, when a power-on command is received, the controller 120 may control the display unit 110 to display a lastly-viewed channel screen.

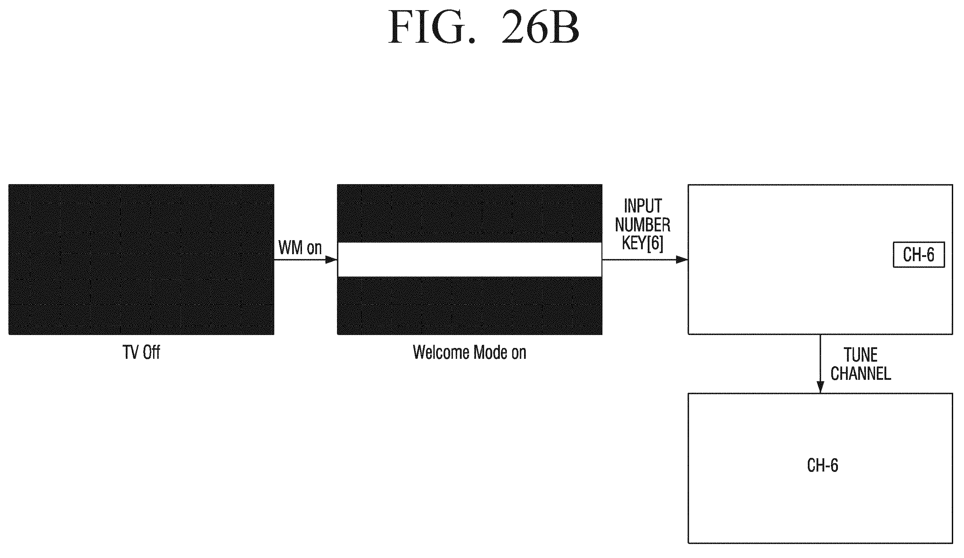

It will be described again in FIG.26B. but when a key input corresponding to a channel number is received, the controller 120 may control the display apparatus 100 to tune and provide a corresponding channel. Therefore, when a user wishes to view a channel different from the lastly viewed TV channel, a user may perform key input which corresponds to the corresponding channel number so that the display apparatus 100 is shifted to a power-on state and the corresponding channel is displayed.

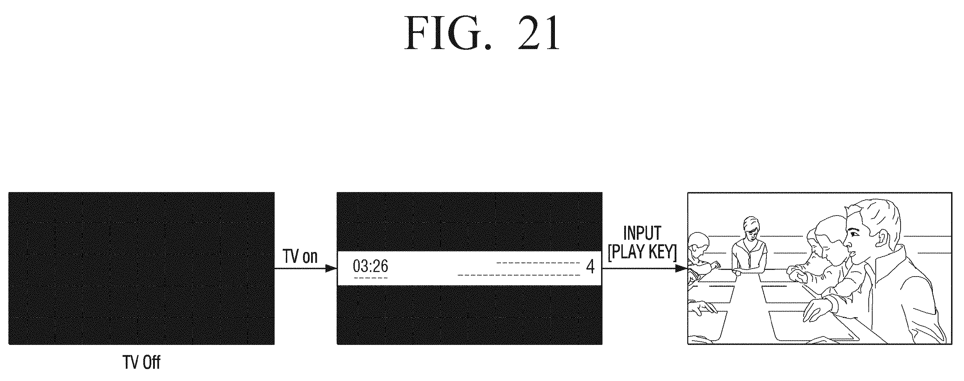

FIG.21 is a view to illustrate an exemplary embodiment to provide information of preferred channel (or book marked channel) registered by a user in a welcome mode. For example, the controller 120, when a preset event occurs prior to a power-on command, may control the display unit 110 to display a UI element which includes at least one of a preferred channel name, channel number, currently broadcasted program name, thumbnail of a channel screen, execution guide. In addition, when 'Play' key input is received from the remote controller 200, the controller 120 may control the display apparatus 100 to tune and display a preferred channel. The 'Play' key is merely an exemplary embodiment and can be set so that a preferred channel is tuned and displayed through input of another key.

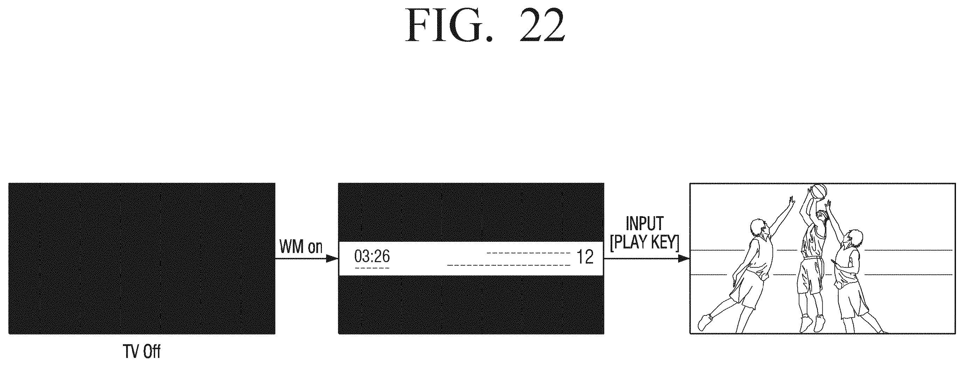

FIG.22 is a view illustrating an exemplary embodiment of providing information on a program which is mostly viewed by the current viewers in a welcome mode. For example, when a welcome mode is activated, the controller 120 may control the communicator 160 to receive information of a program which is mostly viewed by current users. In addition, the controller 120 may control the display unit 110 to display a UI element including at least one of a name of a channel providing a received program, channel number, program name, and execution guide. For example, information on the most popular program can be received from a partner agency such as broadcasting contents provider. As another example, information of collecting channels mostly viewed by smart TV users of the same manufacturer can be received.

After information on a program mostly viewed in a welcome mode screen is displayed, when a preset key input such as 'play' key is received from the remote controller 200, the controller 120 may control the display apparatus 100 to tune and display the corresponding channel.

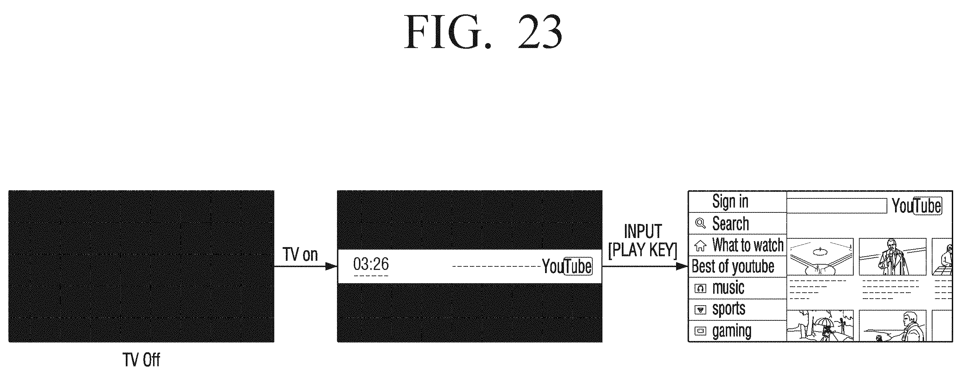

FIG.23 is a view illustrating an exemplary embodiment to provide in a welcome mode information on a lastly-executed application. For example, the controller 120, when a preset event occurs prior to power-on command, may control the display unit 110 to display a UI element including lastly-executed application logo and execution guide. Referring to FIG.23, it can be confirmed that a logo of Youtube which was lastly executed is displayed on a welcome mode screen. Afterwards, when a preset key input such as 'play' key is received from the remote controller 200, the controller 120 may control the display apparatus 100 to execute the corresponding application. Through this, after the display apparatus 100 is changed to a power-on state, inconvenience that an application execution operation should be additionally performed can be overcome.

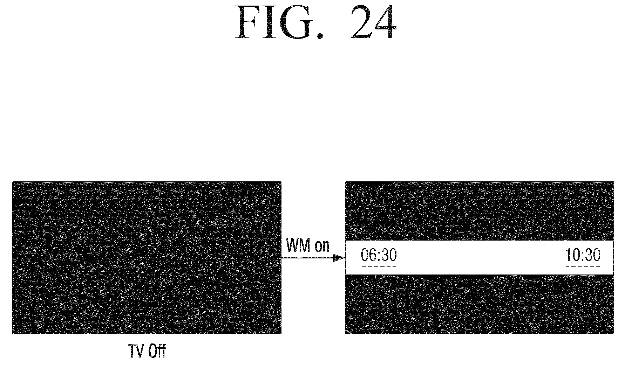

A user can use a welcome mode for a use to view the current time. In addition, as the exemplary embodiment illustrated in FIG.24, the controller 120, when a preset event occurs before a power-on command, may control the display unit 110 to display a UI element to provide time information of areas (London and San Francisco) which a user designated in advance. As another example, if search history to search for a specific area using a map application installed in the display apparatus 100 is seen, the controller 120 may control the display unit 110 to display a UI element to provide time information of frequently searched areas along with time information of a current area.

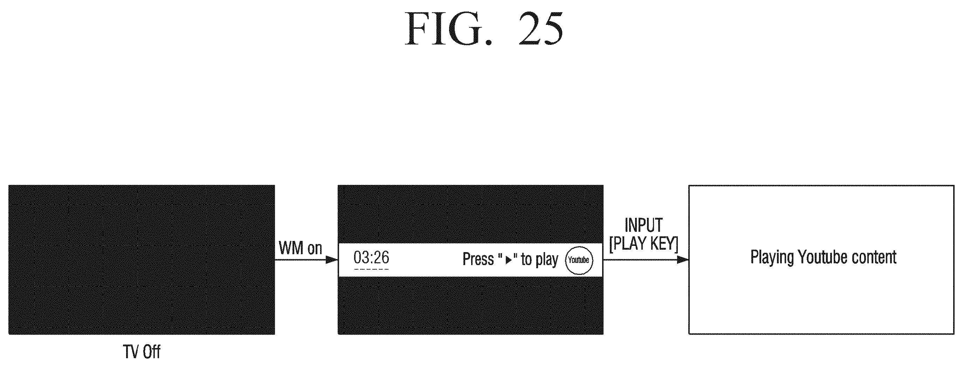

FIG.25 is a view illustrating an exemplary embodiment to provide application information which is running by a user in an external device in a welcome mode, when contents sharing with an external device such as a mobile device is available. For example, when an image clip of which airing time is 2 hours is reproduced up to 39 minutes and 10 seconds through an image application in a mobile device and the same is stopped, if the same image application is executed in the display apparatus 100, the same image clip is automatically reproduced from 39 minutes and 11 seconds, and in this case, contents sharing is available.

Referring to FIG.25, the controller 120, when there is a preset event prior to a power-on command, may control the communicator 160 to search whether there is an external device which can be paired. If there is an external device which can be paired, the controller 120 may control the display unit 110 to display a UI screen providing app information being executed in the external device. After that, when a preset key input such as 'play' key is input from the remote controller 200, the controller 120 may control the display apparatus 100 to reproduce the contents of the application right after.

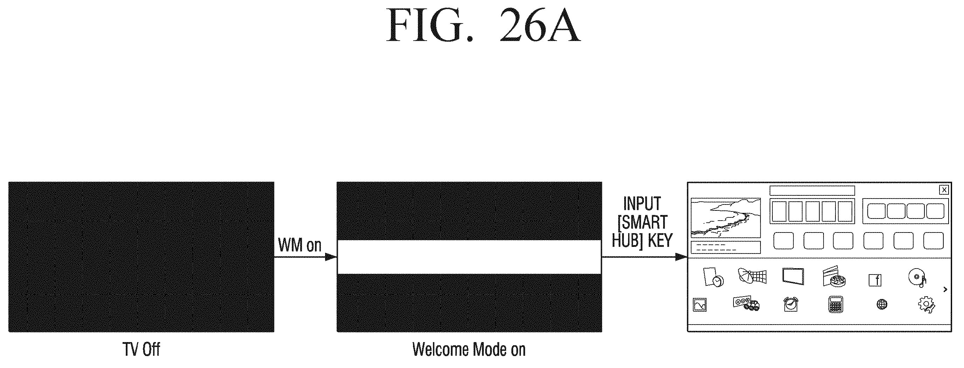

According to an exemplary embodiment, while a welcome mode is activated, when a key input executable in the current source is received from the remote controller 200, the controller 120 may perform a function corresponding to the key input at the same time with shifting the display apparatus 100 to be a power on state. Referring to FIG.26A, in a state that a welcome mode is activated, when 'smart hub' key is input from the remote controller 200, the controller 120 may control the display apparatus 100 to be shifted to a power on state and perform smart hub function at the same time. That is, if the mode is shifted from a welcome mode to a power-on mode, image contents such as a broadcasting screen is not displayed. Instead, smart hub screen is displayed.

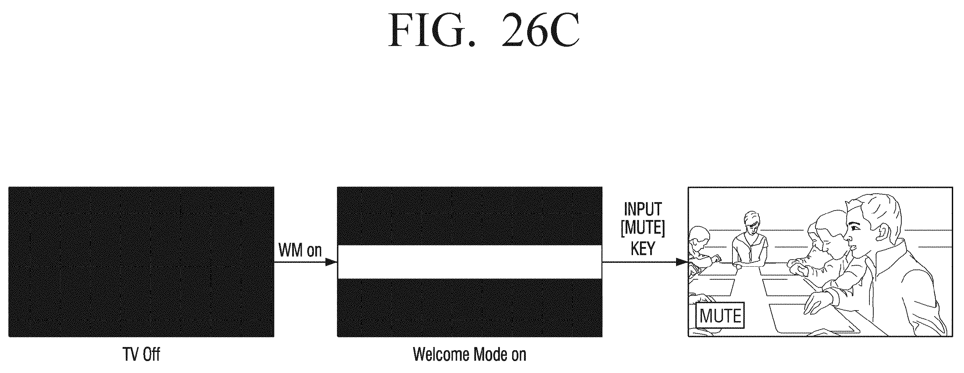

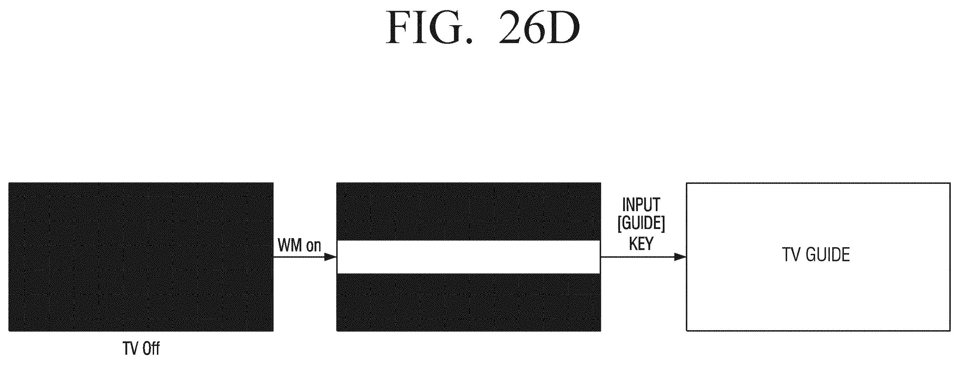

Referring to FIG.26B, while the welcome mode is activated, when a key input corresponding to a channel number is received from the remote controller 200, the controller 120 may control the display apparatus 100 to tune and display a corresponding channel. In addition, as illustrated in FIG.26C, while the welcome mode is activated, when a 'mute' key input is received from the remote controller 200, the controller 120 may control the display apparatus 100 to display image contents in a silence mode. In addition, as illustrated in FIG.26D, if a key 'Guide' input is received, the controller 120 may be shifted to a power on state and control the display apparatus 100 to execute TV guide function at the same time.

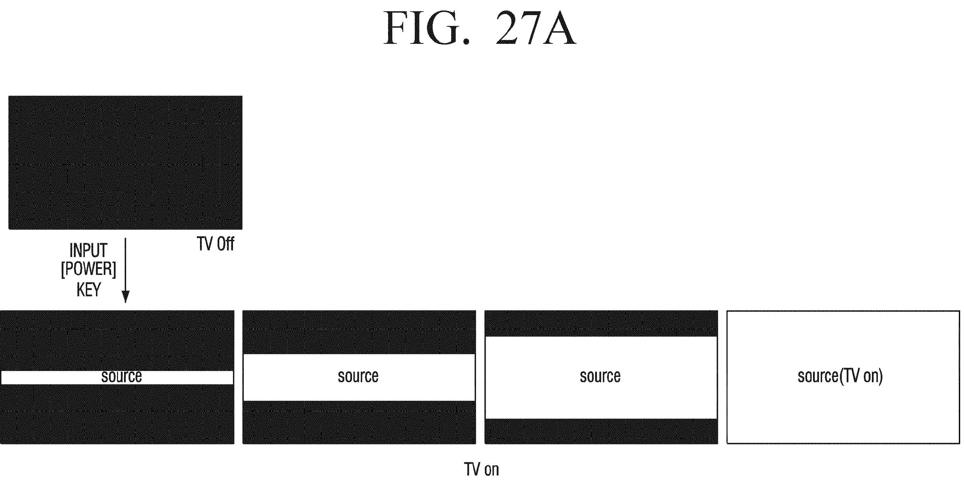

According to another exemplary embodiment, when a specific key of the remote controller 200 is combined or a user command to combine specific keys are received, the display apparatus 100 may enable that a welcome mode is activated after power-on state or power-off state. In FIGS.27A to 28B, it is illustrated that pressing 'Power' for a long time is an example of trigger manipulation which can activate a welcome mode.

In case of FIG.27A, it is illustrated that a 'power' button of the remote controller 200 is pressed to turn on the display apparatus 100. In the meantime, as illustrated in FIG.27A, when the display apparatus 100 is shifted to a power on state, the controller 120 may control the display unit 110 to display an animation effect to unfold from the center of a screen to outward of the screen.

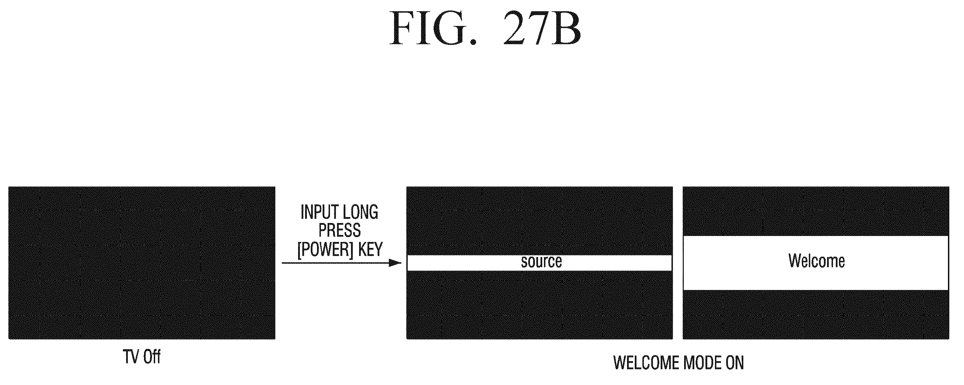

On the contrary, as illustrated in FIG.27B, when a user makes long press of 'power' button of the remote controller 200, the controller 120 may control the display apparatus 100 t shift the apparatus to be in an activated welcome mode instead of power-on state.

The above descriptions describe exemplary embodiments which are provided before receiving a power-on command, but a welcome mode can be provided after the power-off command is received.

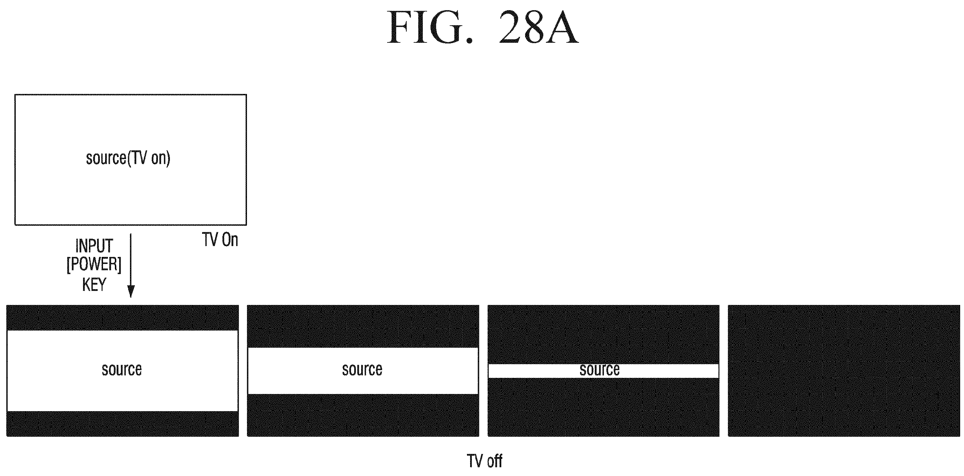

In case of FIG.28A, so that a user turns off the display apparatus 100, the user pushes 'power' button to press the power button of the remote controller 200. When the display apparatus 100 is shifted to a power-off state, the controller 120 may control the display unit 110 to display an animation effect to disappear from outside of a screen toward a center of the screen.

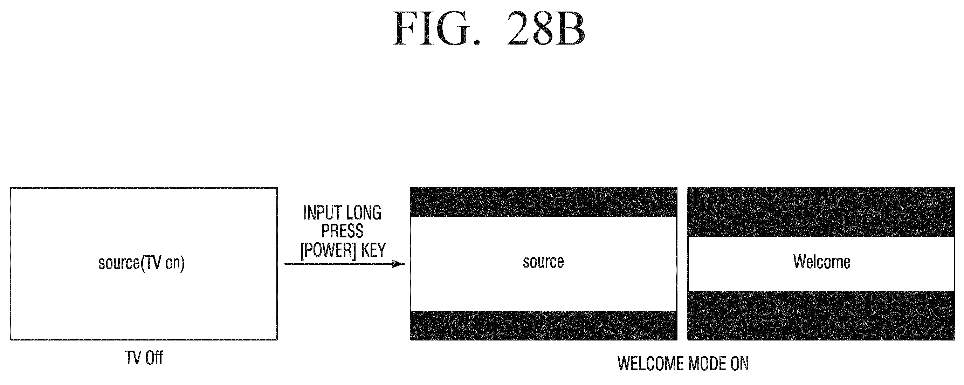

On the contrary, as illustrated in FIG.28B, when a user makes long press of 'power' button of the remote controller 200, the controller 120 may control the display apparatus 100 to shift the apparatus to activated welcome mode instead of power-off state.

Although exemplary embodiments have been shown and described hereinabove, the embodiments are is not limited to specific exemplary embodiments described above, but may be various modified by those skilled in the art to which they pertain without departing from the scope and spirit there as disclosed in the accompanying claims. In addition, such modifications should also be understood to fall within the scope thereof.

Although a few embodiments have been shown and described, it would be appreciated by those skilled in the art that changes may be made in these embodiments without departing from the principles thereof, the scope of which is defined in the claims and their equivalents.

## Claims

1. A display apparatus, comprising:
a display unit; and
a control unit arranged to control the display unit to display a UI (user interface) element when a preset event is generated before a power on command and display image contents when the power on command is input while the UI element is displayed.

2. The display apparatus as claimed in claim 1, wherein the preset event is reception of motion information of a remote control apparatus from the remote control apparatus associated with the display apparatus.

3. The display apparatus as claimed in claim 1 or 2, wherein the control unit is arranged to control the display unit to stop a display of the UI element displayed when a preset time elapses after the UI element is displayed.

4. The display apparatus as claimed in any one of claims 1 to 3, wherein the UI element is a graphic object corresponding to at least one of time information, date information, traffic information, and weather information.

5. The display apparatus as claimed in any one of claims 1 to 4, wherein the control unit is arranged to change the UI element displayed when a preset second event is generated to display the UI element.

6. The display apparatus as claimed in claim 5, wherein the preset second event is at least one of connection with an external server, reception of a UI element change command, reception of a direction change command, and reception of motion information.

7. The display apparatus as claimed in any one of claims 1 to 6, wherein the control unit is arranged to display the UI element only in a region of a display screen on which the image contents are displayed.

8. The display apparatus as claimed in any one of claims 1 to 7, wherein the power on command is at least one of a power state transition command, a source selection command, and a channel change command.

9. The display apparatus as claimed in claim 8, wherein the control unit is arranged to display the image contents displayed before a power supply of the display apparatus is turned off on the display unit when the power state transition command is input while the UI element is displayed.

10. The display apparatus as claimed in claim 8 or 9, wherein the control unit is arranged to display the image contents corresponding to one of the source selection command or the channel change command when the one of the source selection command and the channel change command is input while the UI element is displayed.

11. The display apparatus as claimed in any one of claims 1 to 10, wherein the control unit is arranged to control the display unit to maintains display of the UI element until the display unit is ready to display the image contents and then displays the image contents, even when the power on command is input.

12. The display apparatus as claimed in claim 1, wherein the control unit, when a preset key input is received after the UI element is displayed, shifts to a power-on state and at the same time executes a function corresponding to the preset key input.

13. A remote control apparatus connectable to a display apparatus, comprising:
a sensor unit arranged to sense a motion of the remote control apparatus;
a communication unit arranged to perform communication with the display apparatus; and
a control unit arranged to control the communication unit to transmit a control command to display a pre-registered UI (user interface) element on the display apparatus prior to transmitting a power on command for the display apparatus to the display apparatus, when the sensor unit senses the motion of the remote control apparatus.

14. The remote control apparatus as claimed in claim 13, wherein the communication unit includes:
a first communication unit arranged to transmit the control command to the display apparatus by an infrared (IR) scheme; and
a second communication unit arranged to perform communication with the display apparatus by a Bluetooth scheme, and
the control unit is arranged to transmit the control command through the first communication unit and is connected to the display apparatus by the Bluetooth scheme and then transmits the control command through the second communication unit.

15. The remote control apparatus as claimed in claim 13 or 14, wherein the control unit is arranged to control the communication unit to transmit the control command at a preset period.
